# EUROPÄISCHE PATENTSCHRIFT

(11) **EP 2 571 398 B1**
(45) Veröffentlichungstag und Bekanntmachung des Hinweises auf die Patenterteilung: **28.01.2015**
(21) Anmeldenummer: 11725305.4
(22) Anmeldetag: 19.05.2011
(51) Int. Cl.: A47B 88/04, F03G 1/00

(54) **ANTRIEBSVORRICHTUNG ZUM BEWEGEN EINES BEWEGBAREN MÖBELTEILS**
DRIVE DEVICE FOR MOVING A MOVABLE FURNITURE PART
DISPOSITIF D'ENTRAÎNEMENT SERVANT À DÉPLACER UN ÉLÉMENT DE MEUBLE MOBILE

(30) Priorität: 20.05.2010 AT 8282010
(43) Veröffentlichungstag der Anmeldung: 27.03.2013
(73) Patentinhaber: Julius Blum GmbH, 6973 Höchst (AT)
(72) Erfinder: DUBACH, Fredi, 8344 Bäretwil (CH)
(74) Vertreter: Torggler, Paul Norbert
(86) Internationale Anmeldenummer: PCT/AT2011/000232
(87) Internationale Veröffentlichungsnummer: WO 2011/143682

(56) Entgegenhaltungen:
- WO-A1-2007/028177
- WO-A1-2010/043306
- DE-U1-202009 005 009

## Beschreibung

Die Erfindung betrifft eine Antriebsvorrichtung zum Bewegen eines bewegbaren Möbelteils, insbesondere einer Schublade. Weiters betrifft die Erfindung eine Schubladenausziehführung mit einer solchen Antriebsvorrichtung sowie ein Möbel mit einer derartigen Antriebsvorrichtung.

Aus dem Stand der Technik sind bereits seit geraumer Zeit sogenannte Touch-Latch-Mechanismen für bewegbare Möbelteile wie Schubladen, Klapptüren, usw. bekannt. Dabei erfolgt ein automatisches Öffnen des bewegbaren Möbelteils, nachdem durch einen Benutzer in Schließrichtung auf das bewegbare Möbelteil gedrückt wird. Manchmal sind auch separate Schalter, die eine solche Öffnungsbewegung durchführen, vorgesehen. Durch dieses Überdrücken des bewegbaren Möbelteils wird die Ausstoßvorrichtung entriegelt, wonach durch einen sich entspannenden Kraftspeicher das bewegbare Möbelteil in Öffnungsrichtung aus dem Möbelkorpus ausgestoßen wird. Meist sind entsprechende Ausstoßvorrichtungen unterhalb des Schubladenbodens oder hinter der Schublade angeordnet.

Aus dem Stand der Technik sind ebenfalls seit geraumer Zeit Mechanismen bekannt, die das Schließen eines bewegbaren Möbelteiles erleichtern bzw. verbessern. Dazu gibt es diverse Versionen von Einzugsvorrichtungen, durch die ein bewegbares Möbelteil über den letzten Bereich der Schließbewegung (meist wenige Zentimeter) automatisch eingezogen wird, sodass ein sicheres Schließen der Schublade bzw. des bewegbaren Möbelteils garantiert ist.

Ein Beispiel für eine Veröffentlichung, in der sowohl eine Ausstoßvorrichtung als auch eine Einzugsvorrichtung gezeigt sind, ist die anmeldereigene WO 2007/028177 A1. Zwei aus dieser Schrift stammende Figuren sind als Fig. 15 und 16 in der hier vorliegenden Schrift gezeigt. Darin wird einerseits eine Ausstoßvorrichtung 8 als eine Baueinheit gezeigt. Als zweite, separate Baueinheit ist zwischen Ladenschiene 30 und Korpusschiene 31 eine Einzugsvorrichtung 9 dargestellt, die die Schließbewegung der Ladenschiene 30 gegenüber der Korpusschiene 31 in Schließrichtung SR durchführt. Die Einzugsvorrichtung 9 muss dabei eine eigene Feder, ein eigenes Gehäuse und sämtliche weiteren Mitnehmer usw. integriert haben, dass der Zuziehvorgang einwandfrei übernommen werden kann. Zusätzlich ist in dieser Schrift eine Dämpfvorrichtung 13 für die Einzugsvorrichtung 9 gezeigt.

In ähnlicher Art und Weise zeigt auch die DE 20 2009 005 009 U1 eine Antriebsvorrichtung für ein bewegbares Möbelteil mit einer federbelasteten Ausstoßvorrichtung und einer federbelasteten Selbsteinzugsvorrichtung.

Nachteilig bei diesen bekannten Ausführungen ist, dass zwei getrennte, unabhängige und aufwändige Baueinheiten im Bereich einer Ausziehführung vorgesehen sein müssen, um damit einerseits das Ausstoßen und andererseits das Einziehen durchführen zu können. Insbesondere ist es beim Stand der Technik oftmals relativ kompliziert, das Spannen der Federn durchzuführen, ohne dass ein Benutzer dies als Schwergängigkeit beim Öffnen bzw. Schließen merkt.

Die Aufgabe der Erfindung besteht daher darin, eine gegenüber dem Stand der Technik verbesserte Antriebsvorrichtung zu schaffen. Insbesondere soll die Ausstoßvorrichtung und Einzugsvorrichtung möglichst in eine Baueinheit zusammengefasst werden, sodass weniger Bauteile benötigt werden.

Diese Aufgabe wird in Verbindung mit den Merkmalen des Oberbegriffes von Anspruch 1 dadurch gelöst, dass die Antriebsvorrichtung einerseits als eine ver- und entriegelbare, federbelastete Ausstoßvorrichtung zum Ausstoßen des Möbelteils aus einer Schließstellung in Öffnungsrichtung und andererseits als eine federbelastete Einzugsvorrichtung zum Einziehen des Möbelteils in die Schließstellung fungiert, wobei dieselbe Feder die Antriebsvorrichtung sowohl in dessen Funktion als Ausstoßvorrichtung als auch in dessen Funktion als Einzugsvorrichtung federbelastet. Durch eine derartige Ausführung übernimmt die Feder sowohl die Beaufschlagung für die Ausstoßbewegung der Ausstoßvorrichtung als auch die Beaufschlagung für die Einzugsbewegung der Einzugsvorrichtung. Die Feder kann dabei als Druck- oder Zugfeder ausgebildet sein. Der Begriff Feder umfasst dabei auch Kraftspeicher in Form von Gasdruckfedern. Grundsätzlich kann die Feder auch als magnetische Feder realisiert sein.

Um einen möglichst einfachen Spannvorgang für die Ausstoßvorrichtung und die Einzugsvorrichtung zu realisieren, kann bevorzugt vorgesehen sein, dass die Feder beim Öffnen oder Schließen des bewegbaren Möbelteils entlang eines Spannwegs spannbar ist und einen Entspannungsweg aufweist, wobei die Feder in einem ersten Teil seines Entspannungsweges das bewegbare Möbelteil einzieht und in einem zweiten Teil seines Entspannungsweges das bewegbare Möbelteil ausstößt. Dadurch muss nicht mehr - wie beim Stand der Technik - eine Möglichkeit gefunden werden, um zwei passende Spannwege für die Feder der Einzugsvorrichtung und für die separate Feder der Ausstoßvorrichtung zu finden.

Die genaue Anordnung und Ausgestaltung der Feder ist daher bei der vorliegenden Erfindung an sich beliebig, solange für das Spannen der Feder nur ein Spannweg nötig ist, von welchem die Entspannungsenergie zu einem Teil für das Einziehen und zum anderen Teil für das Ausstoßen verwendet werden kann.

Bevorzugt ist allerdings vorgesehen, dass die Feder in Form einer einzigen Feder ausgebildet ist. Damit ist eine wesentliche Vereinfachung und Verringerung des Platzbedarfs gegeben. Es soll aber als alternative Möglichkeit nicht ausgeschlossen sein, dass die Feder in Form eines Federpakets ausgebildet ist. Dies ermöglicht unterschiedliche Adaptierungen, sodass ein Teil des Federpakets beispielsweise beim Ausstoßen besonders stark seine Entspannungswirkung entfaltet, während ein weiterer Teil des bevorzugt gleichzeitig geladenen Federpakets während des Einzugsvorganges relativ langsam und sanft die Entspannungsenergie in Schließrichtung des bewegbaren Möbelteils wirken lässt. Wesentlich ist, dass die Federn des Federpakets während eines gemeinsamen Spannvorganges gespannt werden, wobei sich allerdings der Beginn und das Ende des Spannens der einzelnen Federn bzw. der Teile des Federpaktes unterscheiden können. Bevorzugt kann vorgesehen sein, dass die einzelnen Federn des Federpakets parallel zueinander geschaltet werden.

Um der Feder diese Doppelfunktion mit sozusagen entgegengesetzten Einzieh- und Ausstoßbewegungen zu ermöglichen, kann bevorzugt vorgesehen sein, dass die Feder in Schließstellung des Möbelteils eine erste, mittlere Federspannung aufweist, die Feder nach dem Ausstoßen des Möbelteils eine zweite, im Wesentlichen entspannte Federspannung in einem bestimmten Ausstoßabstand nach Verlassen der Schließstellung aufweist, die Feder beim Schließen des Möbelteils in einem bestimmten Einziehabstand vor Erreichen der Schließstellung eine dritte, gegenüber der ersten, erhöhte Federspannung erreicht, und dass sich die Feder ausgehend von der dritten Federspannung unter Entspannung und automatischem Einziehen des Möbelteils in die erste Federspannung entspannt. Dadurch steht der Feder von der mittleren Federspannung ein Ausstoßweg (zweiter Entspannungsweg) zur Verfügung, in welchem das Möbelteil ausgestoßen werden kann. Beim Einziehen wird die Feder auf eine über der mittleren Federspannung liegende Federspannung gespannt (Spannweg), wonach im letzten Schließabschnitt ein automatisches Einziehen des Möbelteils erfolgt, indem sich die Feder von der höchsten Federspannung in die mittlere Federspannung entspannt (erster Entspannungsweg).

Besonders bevorzugt kann vorgesehen sein, dass der Einziehabstand kleiner als der Ausstoßabstand ist. Dadurch wird erreicht, dass das Einziehen während eines relativ kurzen Weges erfolgt, während der Ausstoßweg relativ lang ist, sodass das Ausstoßen nicht zu abrupt erfolgt.

Weiters kann besonders bevorzugt vorgesehen sein, dass der Spannweg länger als der zweite Teil des Entspannungswegs ist. Dies ist insbesondere dann der Fall, wenn der Spannwinkel relativ flach ist, wodurch ein leichtes und für den Benutzer fast unbemerktes Spannen der Feder erfolgt.

Da beim Entriegeln bzw. Überdrücken das bewegbare Möbelteil vor der Schließstellung kurzfristig weiter in Schließrichtung bewegt wird, kann bevorzugt vorgesehen sein, dass die Feder beim Entriegeln der Ausstoßvorrichtung eine vierte, gegenüber der dritten leicht erhöhte, Federspannung aufweist.

Um die Einziehbewegung sanfter zu gestalten, ist bevorzugt eine Dämpfvorrichtung, die die Einzugsbewegung der Einzugsvorrichtung dämpft, vorgesehen. Da die Dämpfvorrichtung in Öffnungsrichtung des Möbelteils wirkt, sollte die Einzugskraft und Verriegelungskraft die in die Gegenrichtung wirkende Kraft der Dämpfvorrichtung übersteigen. Die Dämpfvorrichtung garantiert, dass der Einzugsvorgang nicht zu abrupt und laut sondern sanft und leise erfolgt.

Um das Verwenden einer einzigen Feder sowohl für die Ausstoßvorrichtung als auch für die Einzugsvorrichtung konstruktiv einfach zu ermöglichen, kann bevorzugt vorgesehen sein, dass die Antriebsvorrichtung ein erstes und ein zweites Basiselement, die in Öffnungsrichtung bzw. Schließrichtung des bewegbaren Möbelteils relativ zueinander bewegbar sind, ein am ersten Basiselement bewegbar gelagertes, vorzugsweise schwenkbar gelagertes, Steuerelement, die das Steuerelement beaufschlagende Feder und ein mit dem Steuerelement verbundenes Verriegelungselement aufweist, wobei das Steuerelement mit dem Verriegelungselement in einem vorzugsweise herzkurvenförmigen Abschnitt einer Ver- und Entriegelungsbahn geführt ist und am Steuerelement ein Antriebselement für das zweite Basiselement angeordnet ist, wobei das zweite Basiselement eine Führungsbahn für das Antriebselement aufweist und diese Führungsbahn einen Ausstoßabschnitt aufweist, in welchem das zweite Basiselement durch das Antriebselement in Öffnungsrichtung des bewegbaren Möbelteiles gegenüber dem ersten Basiselement bewegbar ist, einen Freilaufabschnitt aufweist, in welchem das Antriebselement in Öffnungsrichtung frei bewegbar ist, einen Spannabschnitt aufweist, in welchem das Antriebselement entgegen der Federkraft der das Steuerelement beaufschlagenden Feder bewegbar ist und einen Einziehabschnitt aufweist, in welchem das Antriebselement unter teilweiser Entspannung der Feder das zweite Basiselement gegenüber dem ersten Basiselement in Schließrichtung des bewegbaren Möbelteils bewegt, wobei der Ausstoßabschnitt der Führungsbahn mit dem Steuerelement, dem Verriegelungselement, dem Antriebselement und der Feder die ver- und entriegelbare Ausstoßvorrichtung bildet und der Einziehabschnitt der Führungsbahn mit dem Steuerelement, dem Antriebselement und derselben Feder die Einzugsvorrichtung bildet.

In anderen Worten heißt das, dass die Feder auf ein Steuerelement wirkt, welches die Ausstoßbewegung und die Einzugsbewegung eines bewegbaren Möbelteiles in Bezug auf den Möbelkorpus steuert. Stellvertretend für den Möbelkorpus bzw. das bewegbare Möbelteil stehen dabei jeweils das erste bzw. zweite Basiselement, wobei das erste Basiselement am bewegbaren Möbelteil und das zweite Basiselement am Möbelkorpus und umgekehrt angebracht sein können. Weiters ist dabei wichtig, dass im Bereich des zweiten Basiselementes eine Führungsbahn ausgebildet ist, mit der das Steuerelement über ein Antriebselement zusammenwirkt. Die wichtigsten Abschnitte in einer solchen Führungsbahn sind der Ausstoßabschnitt, der Spannabschnitt und der Einziehabschnitt.

Gemäß einer besonders bevorzugten Ausführungsform der vorliegenden Erfindung kann vorgesehen sein, dass sich die Feder im Ausstoßabschnitt von der mittleren Federspannung zur zweiten Federspannung entspannt, die entspannte Federspannung im Freilaufabschnitt im Wesentlichen gleich bleibt, sich die Feder im Spannabschnitt von der entspannten Federspannung zur erhöhten Federspannung spannt und sich die Feder im Einziehabschnitt von der erhöhten Federspannung zur ersten Federspannung entspannt. Somit ist die logische Verbindung zwischen den einzelnen Federspannungen und den Führungsbahnabschnitten verdeutlicht.

Gemäß einem bevorzugten Ausführungsbeispiel der vorliegenden Erfindung kann vorgesehen sein, dass das Steuerelement schwenkbar am ersten Basiselement gelagert ist. Alternativ könnte das Steuerelement auch linear beweglich gelagert sein. Um die Bewegung dieses Steuerelementes zu begrenzen, kann bevorzugt vorgesehen sein, dass das Steuerelement einen Begrenzungszapfen aufweist, welcher die Bewegung des Steuerelementes zwischen zwei, vorzugsweise im ersten Basiselement ausgebildeten, Anschlägen begrenzt. Somit kann das Steuerelement zwischen zwei Anschlägen unter Spannung und Entspannung der Feder bewegt werden.

Wenn auch der Ver- und Entriegelungsmechanismus der Ausstoßvorrichtung komplett in die Antriebsvorrichtung integriert sein soll, dann sollte die einen herzkurvenförmigen Abschnitt aufweisende Ver- und Entriegelungsbahn für das Verriegelungselement im ersten Basisteil ausgebildet sein.

Bezüglich des Spannens der Feder kann einerseits vorgesehen sein, dass die Führungsbahn im Spannabschnitt das Antriebselement beim Schließen des bewegbaren Möbelteils entgegen der Federkraft der Feder bewegt. Andererseits könnte auch beim Öffnen bzw. Ausstoßen des bewegbaren Möbelteils das Antriebselement bereits in einen Spannabschnitt zum Spannen der Feder gelangen.

Da die gesamte Antriebsvorrichtung relativ kompakt sein sollte, ist es notwendig, dass sich das erste Basiselement und das zweite Basiselement auch ohne gegenseitige Beeinflussung frei bewegen können. Dies ist besonders zwischen ungefähr halber Schubladenöffnung und kompletter Schubladenöffnung erwünscht. Um dabei allerdings zu garantieren, dass das Antriebselement bei Verlassen des Bereichs mit den Führungsabschnitten und beim Wiedereintreten in den Bereich mit den Führungsabschnitten nicht in die falsche Führungsbahn gerät, kann bevorzugt vorgesehen sein, dass das zweite Basiselement eine vorzugsweise federbelastete Weiche aufweist, die die Öffnungsbewegung des Antriebselements vom Freilaufabschnitt in einen weiteren, komplett freien Freilaufabschnitt erlaubt und bei Schließbewegung das Antriebselement vom weiteren Freilaufabschnitt in den Spannabschnitt lenkt. Dafür kann beispielsweise eine Ablenkschräge oder eine Weichenfeder vorgesehen sein.

Um das Steuerelement einerseits mit der Führungsbahn zum Einziehen und Ausstoßen und andererseits mit der Ver- und Entriegelungsbahn für das Verriegelungselement verbinden und koordinieren zu können, ist gemäß einer bevorzugten Ausführungsform vorgesehen, dass das Verriegelungselement schwenkbar am Steuerelement gelagert ist.

Für einen optimalen Spannvorgang und Einziehvorgang der Feder kann *bevorzugt* vorgesehen sein, dass der Ausstoßabschnitt im Wesentlichen quer zur Öffnungsrichtung verläuft, der Freilaufabschnitt im Wesentlichen in Öffnungsrichtung verläuft, der Spannabschnitt zumindest bereichsweise einen Winkel zwischen 5° und 70°, vorzugsweise zwischen 15° und 50°, gegenüber der Öffnungsrichtung aufweist und der Einziehabschnitt zumindest bereichsweise einen Winkel zwischen 130° und 175°, vorzugsweise zwischen 140° und 165°, gegenüber der Öffnungsrichtung aufweist. Dazu kann weiters vorgesehen sein, dass zumindest einer der Abschnitte der Führungsbahn zumindest teilweise gebogen verläuft. Die genaue Ausführungsform dieser Spann- und Entspannbahnen kann zu einem sanften, schnellen und/oder leichtgängigen händischen Bewegen des bewegbaren Möbelteiles führen, wobei - ohne dass es der Benutzer merkt - sämtliche Federspannungsvorgänge durch die händische Bewegung des Benutzers erfolgen. Somit gilt: Je kleiner bzw. flacher der Winkel des Spannabschnitts, desto leichtgängiger der Spannvorgang.

Besonders bevorzugt kann die gebogene Form der Spannabschnitte derart ausgebildet sein, dass der Übergang zwischen Spannabschnitt und dem Einziehabschnitt dem Einziehabstand entspricht und dort die Feder die höchste Federspannung erreicht. Dabei bilden der Spannabschnitt und der Einziehabschnitt sozusagen einen Hügel, an dessen höchstem Punkt die Feder am stärksten gespannt ist und nach Überwinden dieses Punktes die Feder entspannt und dabei durch Drücken des Antriebselementes gegen den Einziehabschnitt das bewegbare Möbelteil einzieht. Mit anderen Worten kann diese Hügelform dadurch beschrieben werden, dass der Spannabschnitt und der Einziehabschnitt vom Freilaufabschnitt quer zur Öffnungsrichtung beabstandet sind, wobei der größte Abstand beider Abschnitte zum Freilaufabschnitt beim bestimmten Einziehabstand gegeben ist.

Für die hier vorliegende Erfindung gibt es im Wesentlichen zwei Ausführungsmöglichkeiten. Die erste Ausführungsmöglichkeit besteht darin, dass das erste Basiselement dem bewegbaren Möbelteil zugeordnet und das zweite Basiselement einem Möbelkorpus, an oder in welchem das Möbelteil bewegbar gelagert ist, zugeordnet ist. Bei dieser Ausführungsform ist bevorzugt vorgesehen, dass das Verriegelungselement einstückig mit dem Antriebselement ausgebildet ist. Somit verfährt dieses bevorzugt einstückige Bauteil einerseits in der Ver- und Entriegelungsbahn und andererseits in den einzelnen Abschnitten der Führungsbahn für das Antriebselement. Weiters kann dabei bevorzugt vorgesehen sein, dass die Feder als Schenkelfeder ausgebildet ist, wobei ein Schenkel das erste Basiselement und ein Schenkel das Steuerelement beaufschlagt ist.

Die zweite Ausführungsmöglichkeit der vorliegenden Erfindung sieht vor, dass das erste Basiselement einem Möbelkorpus zugeordnet ist und das zweite Basiselement dem bewegbaren Möbelteil zugeordnet ist. Bei dieser Ausführungsform kann bevorzugt vorgesehen sein, dass der Begrenzungszapfen das Antriebselement bildet. Dadurch wird der Begrenzungszapfen zusätzlich dafür genutzt, die Federkraft des Steuerelementes über das Antriebselement bzw. den Begrenzungszapfen auf den Ausstoßabschnitt zu bringen und damit das Möbelteil auszustoßen.

Schutz wird begehrt für eine Schubladenausziehführung für ein bewegbares Möbelteil in Form einer Schublade, welche eine erfindungsgemäße Antriebsvorrichtung aufweist. Dabei kann bevorzugt vorgesehen sein, dass das zweite Ausführungsbeispiel der vorliegenden Antriebsvorrichtung an der Schubladenausziehführung angeordnet bzw. befestigt ist. Dabei kann die Schubladenausziehführung eine Ladenschiene und eine Korpusschiene aufweisen, wobei das erste Basiselement an der Korpusschiene und das zweite Basiselement an der Ladenschiene angeordnet ist.

Zudem wird auch Schutz begehrt für ein Möbel mit einem Möbelkorpus und einem bewegbaren Möbelteil, wobei das Möbelteit durch eine erfindungsgemäße Antriebsvorrichtung einziehbar und ausstoßbar ist.

Gemäß dem ersten Ausführungsbeispiel der hierin beschriebenen Antriebsvorrichtung kann dabei vorgesehen sein, dass das erste Basiselement am bewegbaren Möbelteil, vorzugsweise an der Unterseite eines Schubladenbodens, angeordnet ist und das zweite Basiselement am Möbelkorpus, vorzugsweise an einer am Möbelkorpus befestigten Korpusschiene einer Schubladenausziehführung, angeordnet ist.

Wenn die Antriebsvorrichtung in Form des zweiten Ausführungsbeispiels ausgebildet ist, dann ist das erste Basiselement am Möbelkorpus, vorzugsweise an einer am Möbelkorpus befestigten Korpusschiene einer Schubladenausziehführung, angeordnet und das zweite Basiselement am bewegbaren Möbelteil, vorzugsweise an einer dem Möbelteil zugeordneten Ladenschiene der Schubladenausziehführung, angeordnet.

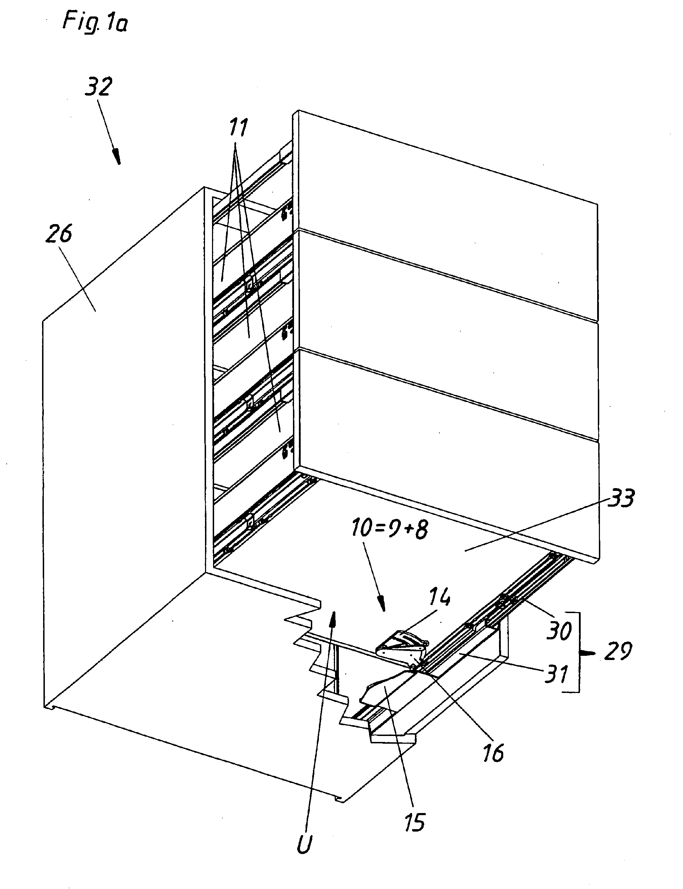

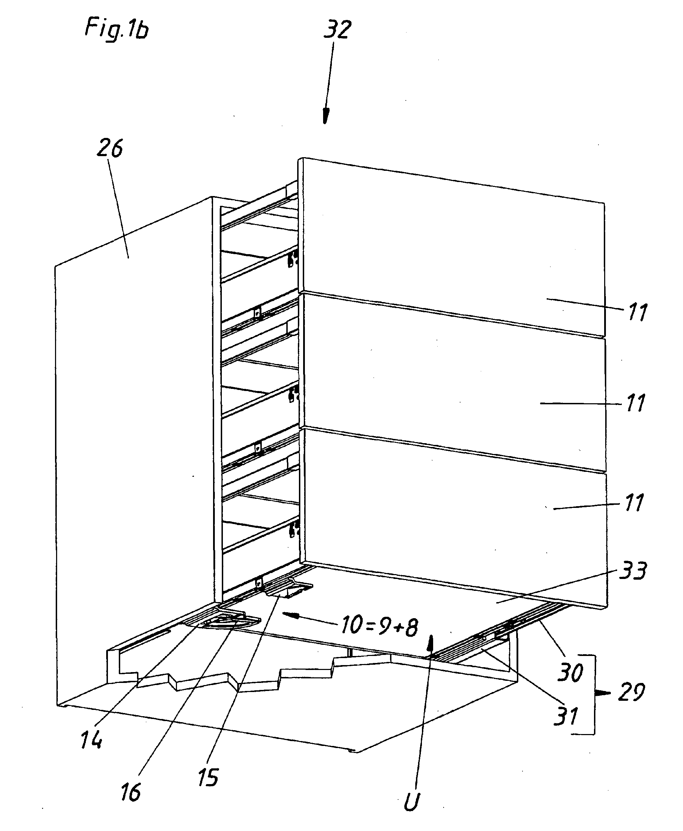

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert, wobei die Fig. 1a bis 13a diverse Darstellungen des ersten Ausführungsbeispiels einer Antriebsvorrichtung von unten und die Fig. 1b bis 13b in gleicher Reihenfolge Darstellungen des zweiten Ausführungsbeispiels einer Antriebsvorrichtung von oben zeigen. Im Detail zeigen:
- Fig. 1a + 1b: eine Ansicht eines Möbels mit an der Unterseite eines bewegbaren Möbelteils angebrachter Antriebsvorrichtung,
- Fig. 2a + 2b: eine Explosionsdarstellung einer Schubladenausziehführung und der Antriebsvorrichtung,
- Fig. 3a + 3b: die Ausziehführung mit Antriebsvorrichtung im zusammengebauten Zustand,
- Fig. 3c: die zweite Ausführungsform der Antriebsvorrichtung von unten,
- Fig. 4a + 4b: die Antriebsvorrichtung in verriegelter Stellung,
- Fig. 5a + 5b: die Antriebsvorrichtung in entriegelter Stellung
- Fig. 6a + 6b: die Antriebsvorrichtung beim Ausstoßen,
- Fig. 7a + 7b: die Antriebsvorrichtung nach Beendigung des Ausstoßvorganges,
- Fig. 8a + 8b: die weiterführende Öffnungsbewegung nach dem Ausstoßen,
- Fig. 9a + 9b: das Antriebselement beim Verlassen des Freilaufabschnitts,
- Fig. 10a+ 10b: die Stellung der Basiselemente im kompletten Freilauf zueinander,
- Fig. 11a+ 11b: die Stellung der Antriebsvorrichtung beim Spannen der Feder,
- Fig. 12a+ 12b: die Stellung der Antriebsvorrichtung bei komplett gespannter Feder,
- Fig. 13a+ 13b: die Stellung der Antriebsvorrichtung beim Einziehen des bewegbaren Möbelteils,
- Fig. 14: ein Kraft-Weg-Diagramm der Feder und der Schublade mit den entsprechenden Positionen entlang der Führungsbahn,
- Fig. 15: eine Ausstoßvorrichtung nach dem Stand der Technik bei Beendigung der Spannung der Ausstoßfeder,
- Fig. 16: eine Ausstoßvorrichtung nach dem Stand der Technik, wobei eine separate Einzugsvorrichtung das Möbelteil einzieht,
- Fig. 17: eine 3-D-Bild eines dritten Ausführungsbeispiels mit einem Möbelantrieb für eine Möbelklappe,
- Fig. 18: eine Explosionsdarstellung von Fig. 17,
- Fig. 19 bis 26: den Bewegungsablauf des dritten Ausführungsbeispiels in einer Ansicht und
- Fig. 27 bis 35: schematisch den Bewegungsablauf eines vierten Ausführungsbeispiels einer Antriebsvorrichtung mit einer Feder zum Ausstoßen und Einziehen.

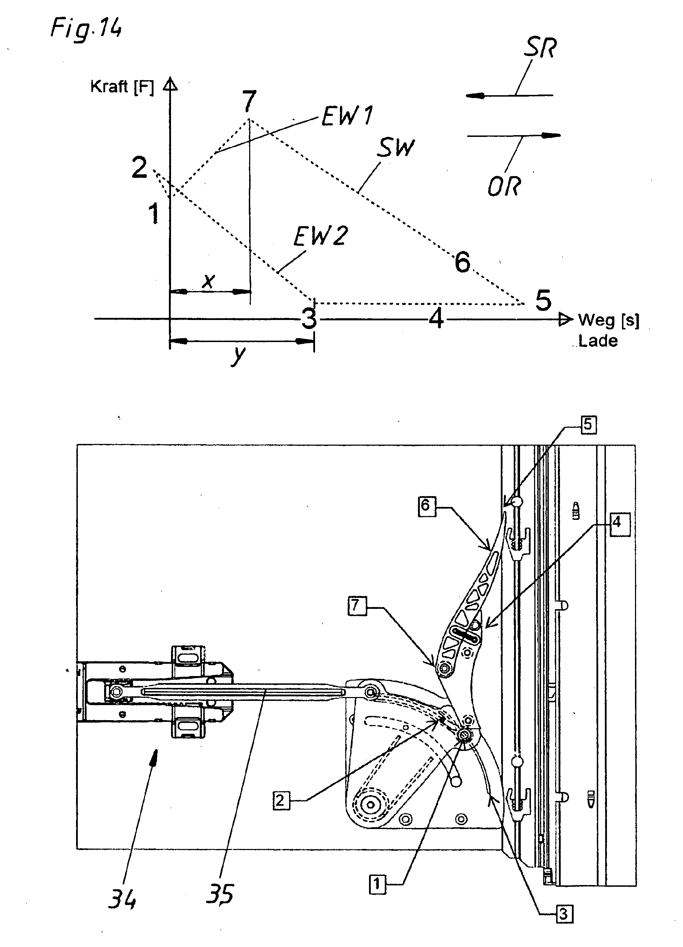

Fig. 1 a zeigt eine teilweise aufgebrochene 3D-Ansicht eines Möbels 32 von unten. Dieses Möbel 32 weist dabei einen Möbelkorpus 26 und drei bewegbare Möbelteile 11 in Form von Schubladen auf. Diese bewegbaren Möbelteile 11 sind in am Möbelkorpus 26 befestigen Schubladenausziehführungen 29 und dessen Ladenschienen 30 und Korpusschienen 31 bewegbar gelagert. An der Unterseite U des Schubladenbodens 33 ist dabei eine Antriebsvorrichtung 10 angeordnet, die sowohl als Ausstoßvorrichtung 8 als auch als Einzugsvorrichtung 9 für das bewegbare Möbelteil 11 ausgebildet ist. Diese Antriebsvorrichtung 10 besteht aus einem ersten, am bewegbaren Möbelteil 11 angeordneten Basiselement 14 und einem zweiten, am Möbelkorpus 26 bzw. an der Korpusschiene 31 angeordneten Basiselement 15. Zwischen diesen beiden Elementen 14 und 15 wirkt ein Steuerelement 16. Dieses Steuerelement 16 kann - besonders bei breiten Schubladen sinnvoll - über eine Synchronisationsstange 35 und eine Synchronisationsvorrichtung 34 (siehe Fig. 14) mit einer zweiten, auch nicht dargestellten Antriebsvorrichtung an der anderen Seite des bewegbaren Möbelteiles 11 verbunden sein, um eine beidseitige Synchronisierung der Einziehbewegung und Ausstoßbewegung zu erreichen.

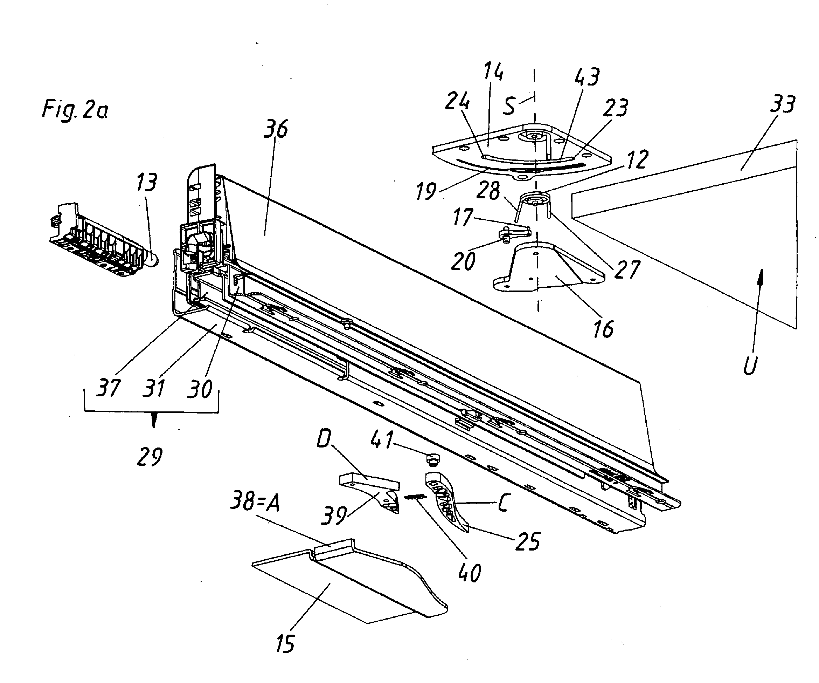

Fig. 2a zeigt eine Schubladenzarge 36, die mit der Schubladenausziehführung 29, bestehend aus Korpusschiene 31, Mittelschiene 37 und Ladenschiene 30, verbunden ist. Um die Schließbewegung der Ladenschiene 30 gegenüber der Korpusschiene 31 zu dämpfen, kann eine Dämpfvorrichtung 13 in der Schubladenausziehführung 29 integriert sein. Im unteren Bereich ist das zweite Basiselement 15 dargestellt, welches einen aufgebogenen Ausstoßanschlag 38 aufweist, der den Ausstoßabschnitt A bildet. Dieses zweite Basiselement 15 wird an der Korpusschiene 31 angebracht. Auf diesem zweiten Basiselement 15 wird das Einzugsführungselement 39 befestigt, welches den Einziehabschnitt D aufweist. Mit diesem Einziehführungselement 39 ist eine Weiche 25 über ein Schwenkachsenteil 41 drehbar verbunden und von einer Weichenfeder 40 beaufschlagt. An der Weiche 25 selbst ist der gebogene Spannabschnitt C ausgebildet.

Im oberen Bereich der Fig. 2a ist das erste Basiselement 14 dargestellt, welches an der Unterseite U des Schubladenbodens 33 montiert wird. An der Unterseite dieses ersten Basiselementes 14 ist eine Schwenkbahn 43 mit Endanschlägen 23 und 24 ausgebildet, zwischen welchen das Steuerelement 16 über einen hier nicht dargestellten Begrenzungszapfen 22 verschwenkbar ist. Zwischen dem ersten Basiselement 14 und dem Steuerelement 16 ist eine diese beiden Teile beaufschlagende Schenkelfeder 12 mit den Schenkeln 27 und 28 angeordnet. Am Steuerelement 16 ist ein einstückiges Bauteil schwenkbar gelagert, welches einerseits das Antriebselement 20 und andererseits das Verriegelungselement 17 aufweist, wobei dieses Verriegelungselement 17 in der Ver- und Entriegelungsbahn 19 im ersten Basiselement 14 verfahrbar ist. Das Antriebselement 20 seinerseits greift durch das Steuerelement 16 hindurch und liegt an den entsprechenden Abschnitten A, C und D des zweiten Basiselements 15 an.

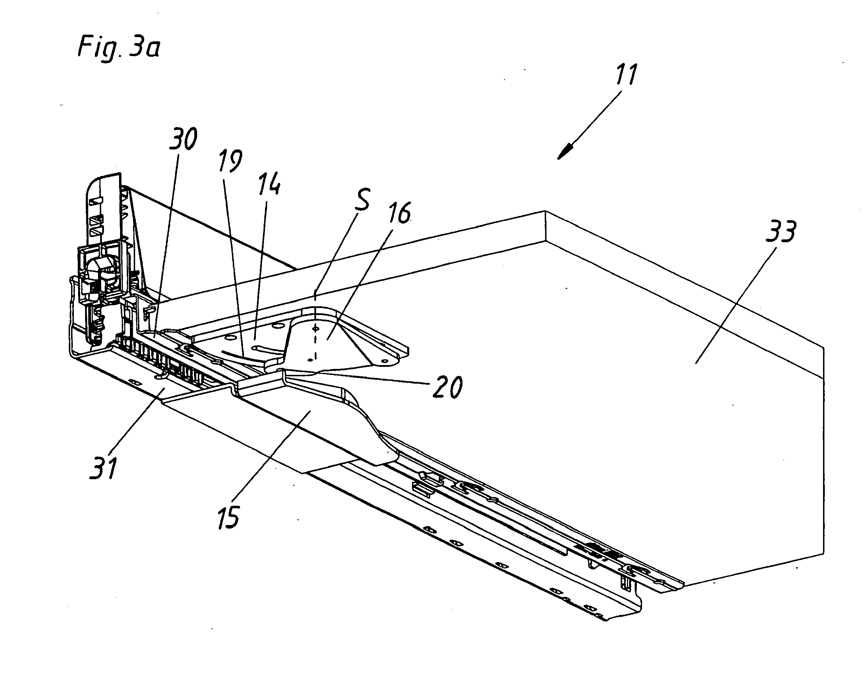

Fig. 3a zeigt einen Teil eines bewegbaren Möbelteiles 11, wobei der Schubladenboden 33 an der Ladenschiene 30 montiert ist. Weiters sind die an der Korpusschiene 31 bzw. am Schubladenboden 33 befestigten Basiselemente 14 und 15 in Montagestellung gezeigt, wobei das Steuerelement 16 entlang der Schwenkachse S am ersten Basiselement 14 gelagert ist. Das Antriebselement 20 liegt am Ausstoßanschlag 38 (Ausstoßabschnitt A) an.

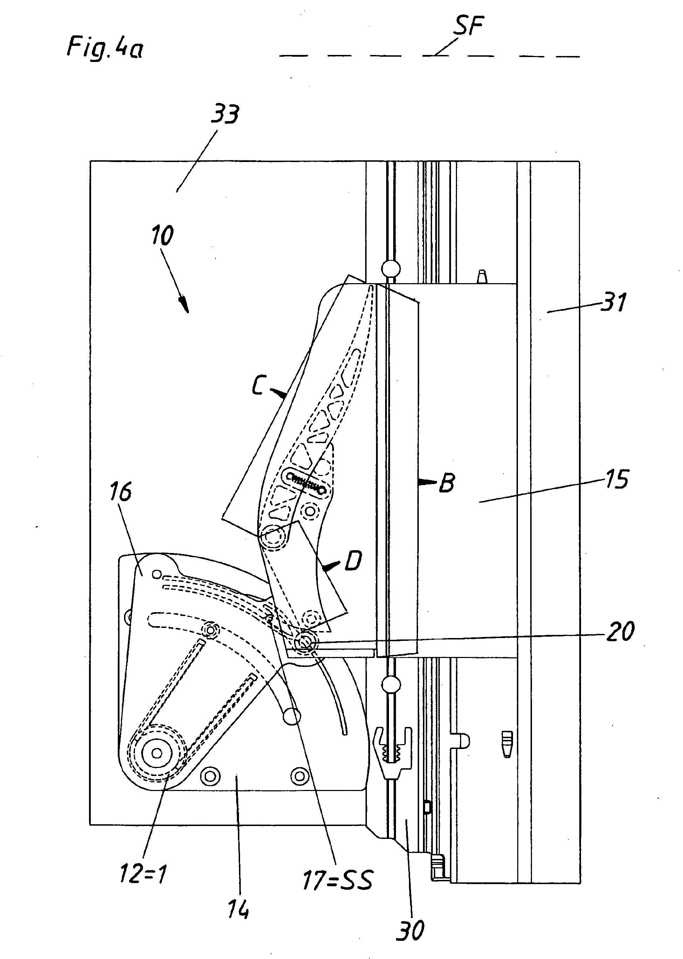

Fig. 4a zeigt einen Schubladenboden 33 von unten, wobei im oberen Bereich die Schubladenfront SF als strichlierte Linie schematisch angedeutet ist. In dieser Darstellung gemäß Fig. 4a ist das Verriegelungselement 17 in Schließstellung SS im herzkurvenförmigen Abschnitt 18 der Ver- und Entriegelungsbahn 19 verriegelt. Die Feder 12 befindet sich in der ersten mittleren Federspannung 1. Das Antriebselement 20 befindet sich zwischen Einziehführungselement 39 und Ausstoßanschlag 38.

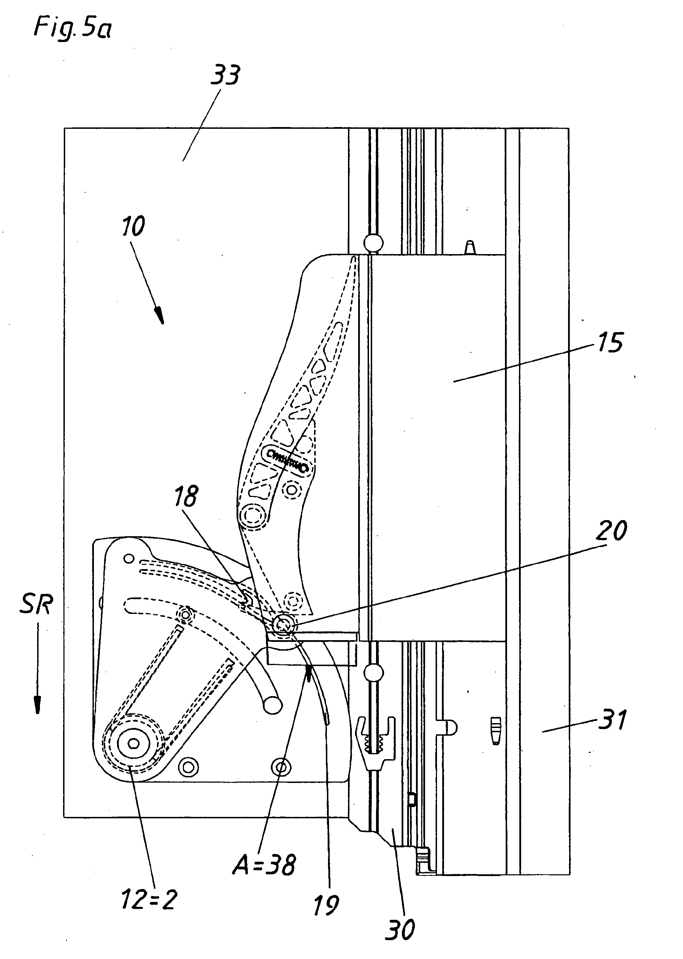

In Fig. 5a wird - durch Drücken auf die Schubladenfront SF in Schließrichtung SR - der Schubladenboden 33 mit der Ladenschiene 30 ebenfalls in Schließrichtung SR relativ zur Korpusschiene 31 nach hinten bewegt, wodurch der Verriegelungszapfen 17 sich aus dem herzkurvenförmigen Abschnitt 18 der Ver- und Entriegelungsbahn 19 bewegt. Dadurch erfolgt die Entriegelung der Antriebsvorrichtung 10. Durch das Überdrücken in Schließrichtung SR wird die Feder 12 in die leicht erhöhte Federspannung 2 bewegt.

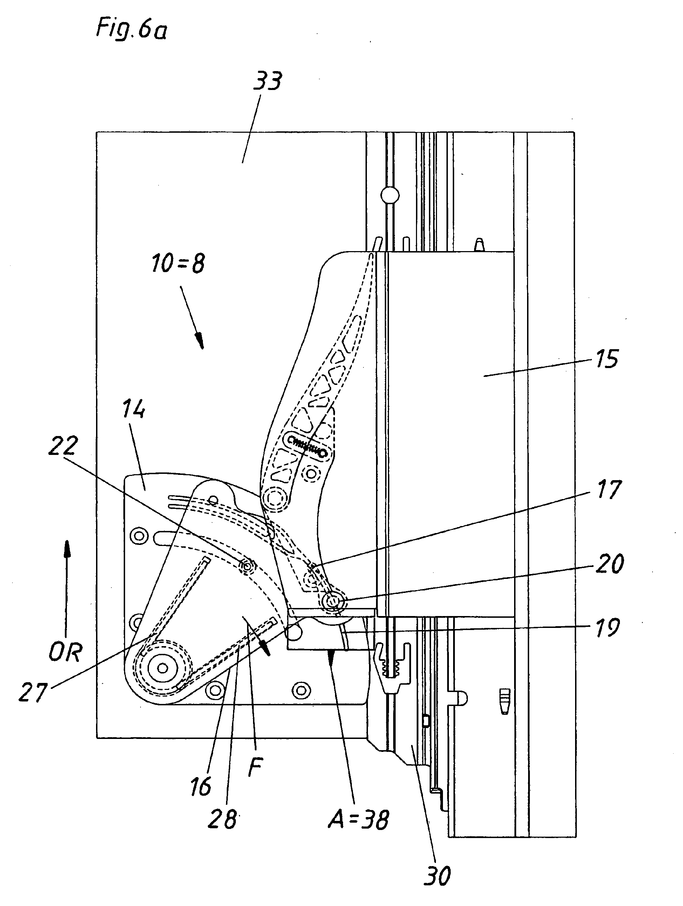

In Fig. 6a ist dargestellt, was nach dem Entriegeln des Verriegelungselements 17 passiert: Dadurch, dass das Verriegelungselement 17 nicht mehr im herzkurvenförmigen Abschnitt 18 der Ver- und Entriegelungsbahn 19 verriegelt ist, kann die Feder 12 über den Schenkel 28 seine Federkraft F auf das Steuerelement 16 abgeben, wodurch sich das Steuerelement 16 gegenüber dem ersten Basiselement 14 verschwenkt. Das am Steuerelement 16 angeordnete Antriebselement 20 drückt dabei gegen den Ausstoßabschnitt A der Führungsbahn 21, welches vom Ausstoßanschlag 38 des zweiten Basiselements 15 gebildet wird. Dadurch bewegt sich das erste Basiselement 14 und damit die gesamte Schublade 11 in Öffnungsrichtung OR gegenüber dem zweiten Basiselement 15 und damit auch gegenüber der Korpusschiene 31 und dem Möbelkorpus 26. Somit bildet die Antriebsvorrichtung 10 die Ausstoßvorrichtung 8, wobei die Feder 12 die Ausstoßfederkraft F aufbringt.

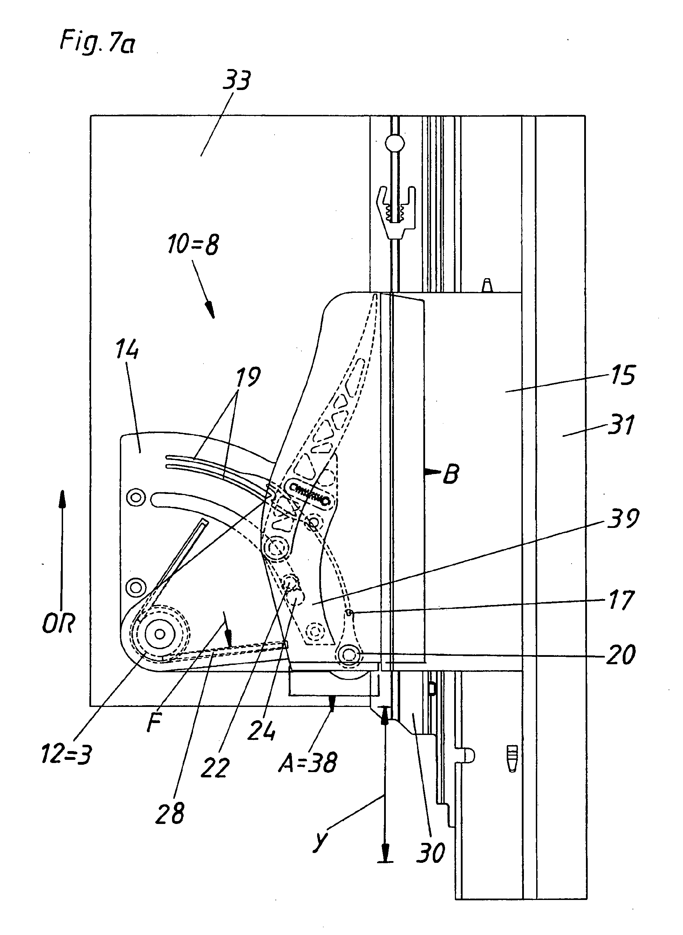

In Fig. 7a ist der Ausstoßvorgang abgeschlossen und die Feder 12 hat sich bis zur zweiten, entspannten Federspannung 3 entspannt, wobei die Relativbewegung des Steuerelementes 16 gegenüber dem ersten Basiselement 14 durch das Anschlagen des Begrenzungszapfens 22 am Anschlag 24 beendet wird. In dieser Fig. 7a ist auch ersichtlich, dass das Antriebselement 20 so das Ende des Ausstoßabschnittes A erreicht hat und in Öffnungsrichtung OR nicht mehr vom Einzugsführungselement 39 begrenzt ist. Von der Schublade 11 wurde vom Entriegeln bis zum Erreichen des Endes des Ausstoßabschnittes A der Ausstoßabstand y überwunden.

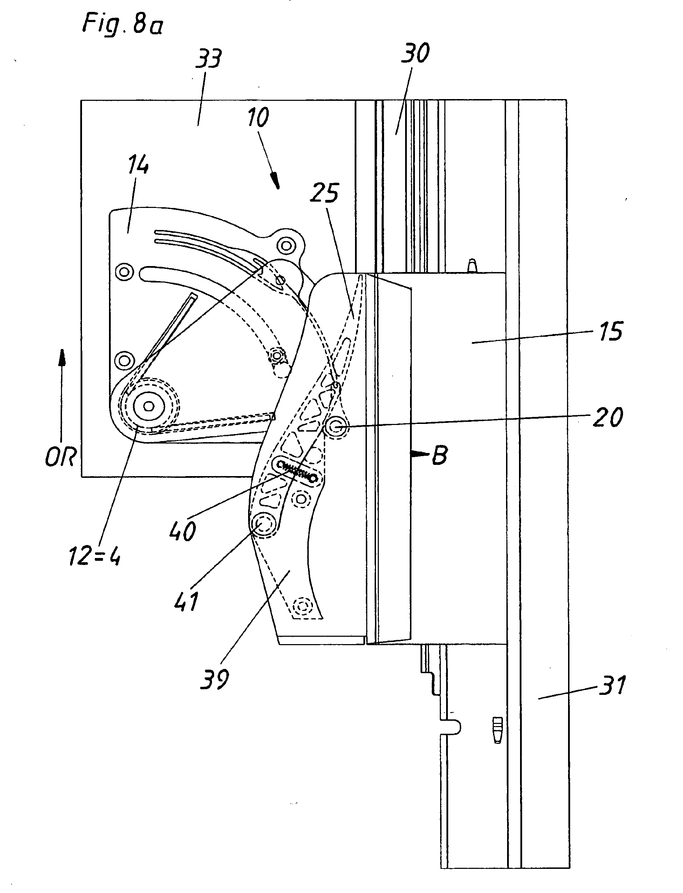

In Fig. 8a befindet sich das Antriebselement 20 im Freilaufabschnitt B, wobei das bewegbare Möbelteil 11 in Öffnungsrichtung OR ausgezogen wird. Die Feder 12 befindet sich dabei in der entspannten Federspannung 4.

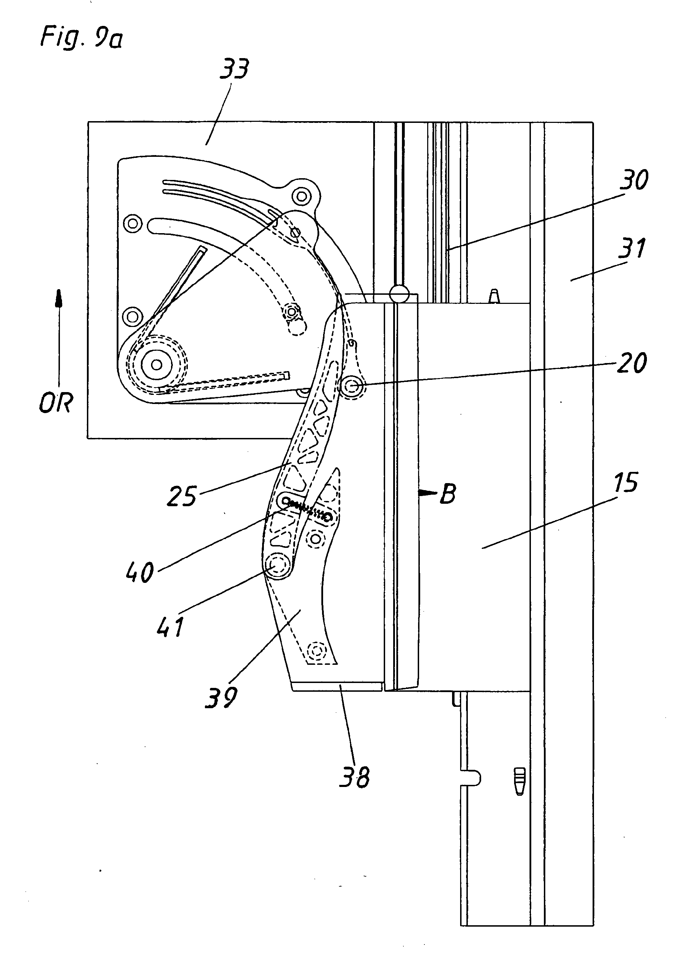

Wenn gemäß Fig. 9a das bewegbare Möbelteil 11 weiter in Öffnungsrichtung OR bewegt wird, drückt das Antriebselement 20 die Weiche 25 gegen die Federkraft der Weichenfeder 40 und verschwenkt bzw. klappt die Weiche 25 am Schwenkachsenteil 41 gegenüber dem Einzugsführungsefement 39 und somit dem zweiten Basiselement 15.

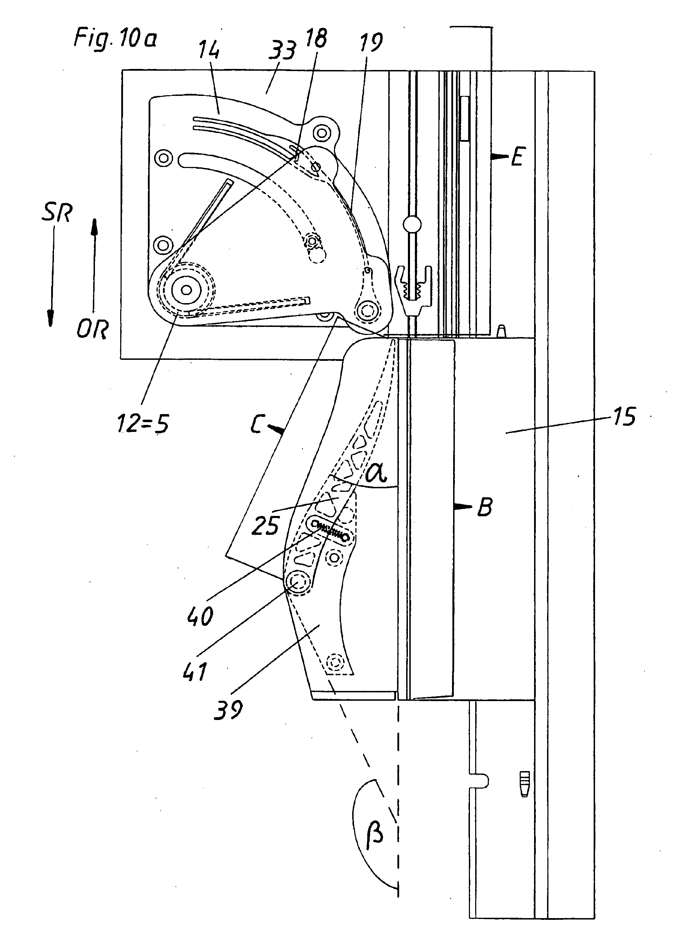

Wenn gemäß Fig. 10a die Schublade 11 weiter in Öffnungsrichtung OR bewegt wird und außerhalb des Freilaufabschnittes B gelangt, zieht die Weichenfeder 40 die Weiche 25 wieder in die Ausgangsstellung zurück. Das bewegbare Möbelteil 11 befindet sich nunmehr im kompletten Freilaufabschnitt E, in welchem das bewegbare Möbelteil 11 beliebig in Öffnungsrichtung OR und Schließrichtung SR bewegt werden kann. Die Feder 12 befindet sich weiterhin in einer entspannten Federspannung 5. Im Bereich des zweiten Basiselements 15 ist ersichtlich, dass die Weiche 25 und dessen Spannabschnitt C einen Durchschnittswinkel α gegenüber der Schließrichtung SR aufweist und das Einzugsführungselement 39 und dessen Einziehabschnitt D einen Winkel β gegenüber der Schließrichtung SR aufweist. Diese Winkel α und β können derart gestaltet werden, dass sich eine den Wünschen des Benutzers entsprechende, optimale und sanfte Schubladenbewegung realisieren lässt. Je flacher der Winkel α ist, desto länger ist der Spannabschnitt C, wodurch der Spannvorgang sanfter und leichtgängiger erfolgen kann. Dies ist umgemünzt auf das Kraft-Weg-Diagramm in Fig. 14 auch durch den langen und relativ flachen Spannweg SW gegeben.

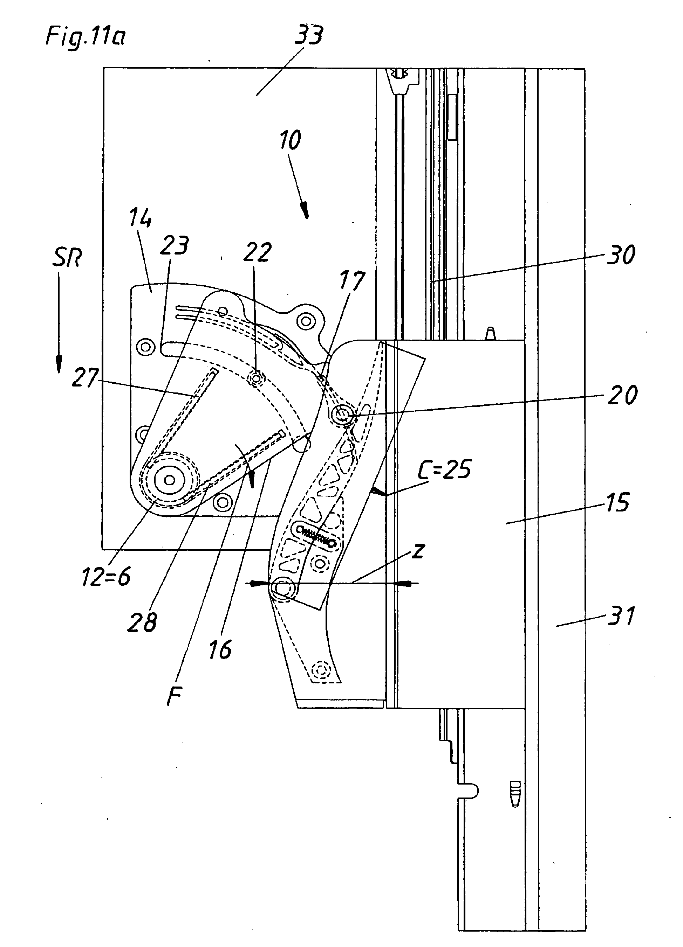

In Fig. 11a wird das bewegbare Möbelteil 11 wieder in Schließrichtung SR bewegt, wobei sich das Antriebselement 20 aufgrund der wieder zurückbewegten Weiche 25 entlang des Spannabschnittes C auf der linken Seite der Weiche 25 bewegt. Durch das Bewegen des Antriebselement 20 entlang des gegenüber der Schließrichtung SR schrägen Spannabschnittes C wird das Steuerelement 16 gegenüber dem Basiselement 14 gegen den Schenkel 28 der Feder 12 gedrückt, wodurch die Feder 12 gegen die Federkraft F gespannt wird und die sich erhöhende Federspannung 6 erreicht. Bei dieser Bewegung des Steuerelementes 16 bewegt sich auch das Verriegelungselement 17 entlang der Ver- und Entriegelungsbahn 19 in Richtung herzkurvenförmigen Abschnitt 18. Auch der Begrenzungszapfen 22 wird vom Anschlag 24 wieder in Richtung Anschlag 23 bewegt. Der Höhepunkt des Spannvorganges wird an dem Punkt des Spannabschnittes C erreicht, an welchem der Abstand z zum Freilaufabschnitt B am größten ist.

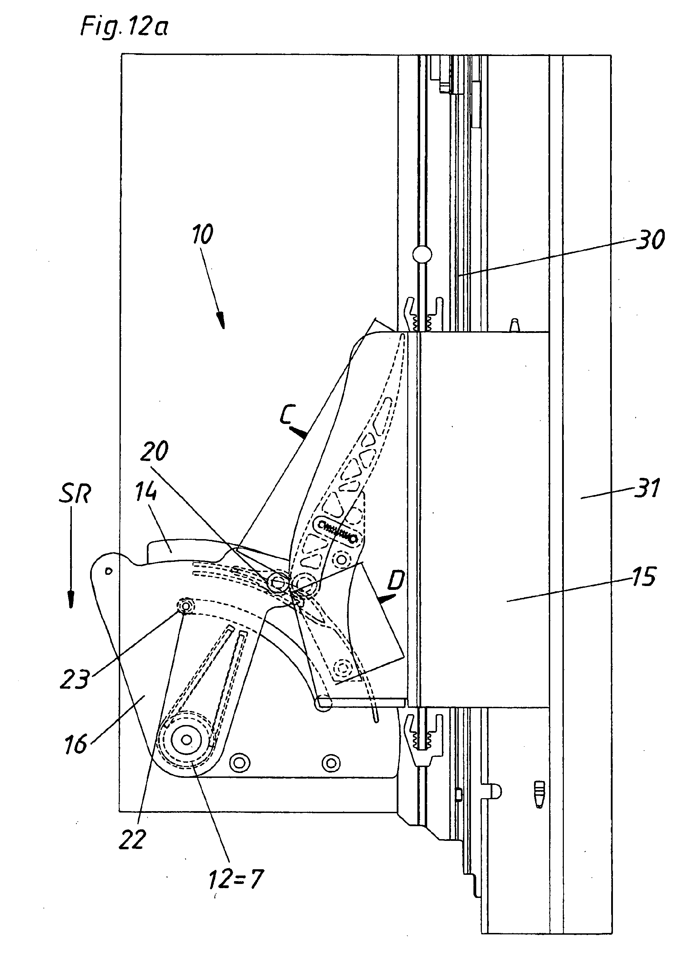

In Fig. 12a ist dieser Punkt erreicht, wobei die Feder 12 durch das vollkommene Verschwenken des Steuerelementes 16 bis zum Anschlag 23 im ersten Basiselement 14 auf die dritte, erhöhte Federspannung 7 gespannt ist. An diesem Punkt des Antriebselements 20 erfolgt der Übergang vom Spannabschnitt C in den Einziehabschnitt D.

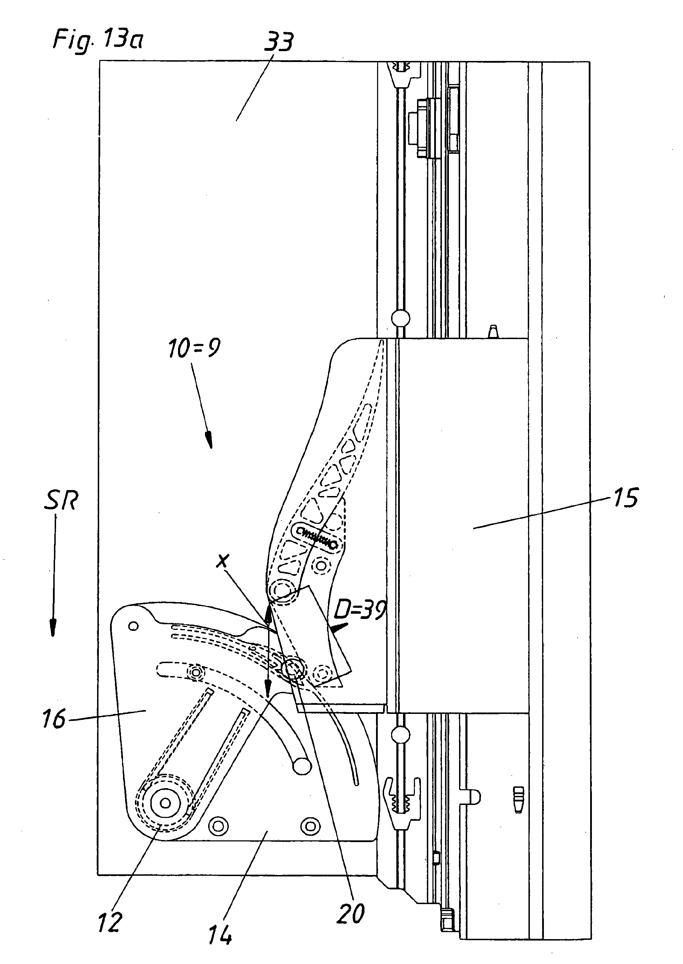

Demgemäß ist in Fig. 13a dargestellt, wie sich durch das Gleiten des Antriebselementes 20 entlang des Einziehabschnittes D die Feder 12 wieder entspannt und dadurch das bewegbare Möbelteil in Schließrichtung SR einzieht. Somit fungiert die Antriebsvorrichtung 10 auch als Einzugsvorrichtung 9, indem dieselbe Feder 12 über das Steuerelement 16, das Antriebselement 20 und den Einziehabschnitt D einziehend auf das bewegbare Möbelteil 11 wirkt und das bewegbare Möbelteil 11 nach Überwinden des Einziehabstandes x die Schließstellung SS erreicht.

Fig. 14 zeigt ein Kraft-Weg-Diagramm, wobei auf der Y-Achse die Federkraft F der Feder 12 dargestellt ist und auf der X-Achse der Weg s des bewegbaren Möbelteils in Öffnungsrichtung OR bzw. Schließrichtung SR. Die strichlierte Linie zeigt einen idealisierten Verlauf und kann bei einer konkreten Ausführung natürlich Schwankungen und Kurven aufweisen. Von der ersten mittleren Federspannung 1 bei Schließstellung SS des bewegbaren Möbelteils bewegt sich das Möbelteil 11 durch Überdrücken weiter in Schließrichtung SR, wobei die Federkraft auf die leicht erhöhte Federspannung 2 zusätzlich gespannt wird. Nach dieser durch Überdrücken erfolgten Entriegelung entspannt sich die Feder 12 von der leicht erhöhten Federspannung 2 unter Ausstoßen des Möbelteiles 11 in Öffnungsrichtung OR entlang des zweiten Entspannungswegs EW2 bis zur zweiten, entspannten Federspannung 3, wobei der Ausstoßabschnitt y zurückgelegt wird. Während des weiteren Öffnungsweges der Schublade 11 verbleibt die Federkraft F der Feder 12 bei der Federspannung 4 und 5. Beim Schließen des bewegbaren Möbelteiles 11 gelangt ein Teil der Antriebsvorrichtung 10 in den Spannabschnitt C (Spannweg SW der Feder 12), wodurch die sich erhöhende Federspannung 6 erreicht wird, welche in Punkt 7 der Federspannung ihren Höhepunkt erreicht. Von dieser Federspannung 7 erfolgt über den Einziehabschnitt C und durch Entspannung der Federkraft F entlang des Entspannungswegs EW1 von der höchsten Federspannung 7 zur mittleren Federspannung 1 das Einziehen des bewegbaren Möbelteils 11 um den Einziehabstand x. In dieser Fig. 14 ist auch ersichtlich, dass der Ausstoßabstand y größer als der Einziehabstand x ist. Im unteren Bereich der Fig. 14 sind die Stellungen des Antriebselementes 20 entlang der Führungsbahn 21 gezeigt, die mit den Federspannungspunkten 1 bis 7 im Wesentlichen übereinstimmen.

Dieses gesamte Kraft-Weg-Diagramm gemäß Fig. 14 bildet ein Hysterese-System. D. h. nach Wegfall der Ursache des Spannens (Ursache: Schließbewegung des bewegbaren Möbelteils) wird die beim Spannen gespeicherte Energie in zwei Schritten (Einziehbewegung und Ausstoßbewegung) abgegeben, wodurch die Fortdauer der Wirkung des Spannens nach Wegfall des spannungsverursachenden Schließens gegeben ist. Somit ist der Spannweg SW zwischen Federspannung 5 und 7 länger als der Ausstoßweg EW2 zwischen Federspannung 2 und 3.

Fig. 1b zeigt eine Ansicht eines Möbels 32 von unten, wobei an der Unterseite U des Schubladenbodens 33 im Frontbereich ein zweites Ausführungsbeispiel einer erfindungsgemäßen Antriebsvorrichtung 10 angeordnet ist, wobei die Antriebsvorrichtung 10 sowohl die Einzugsvorrichtung 9 als auch die Ausstoßvorrichtung 8 bildet. Gleiche Bezugszeichen beschreiben dabei die gleichen Elemente wie im ersten Ausführungsbeispiel gemäß den Fig. 1a bis 13a. Demgemäß ist in Fig. 1b das erste Basiselement 14 (mit dem verschwenkbaren Steuerelement 16) am Korpus 26 bzw. an der Korpusschiene 31 angebracht, während das zweite Basiselement 15 an der Ladenschiene 30 angebracht ist.

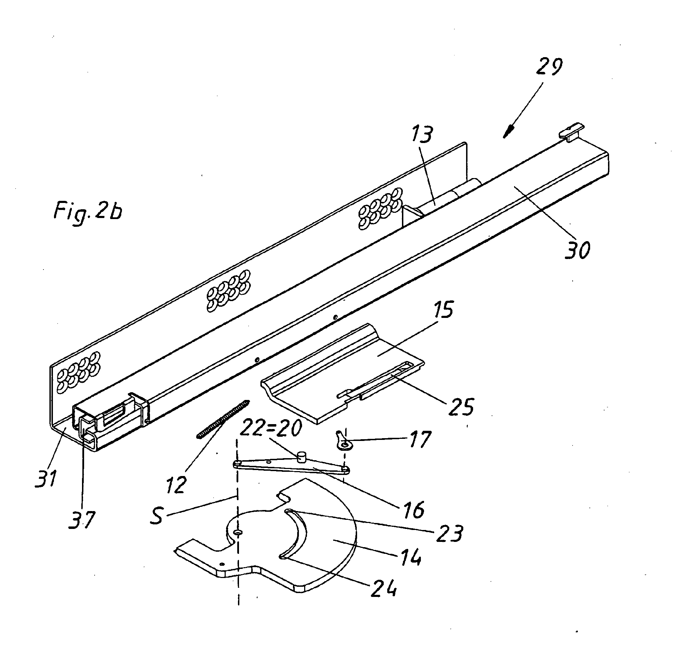

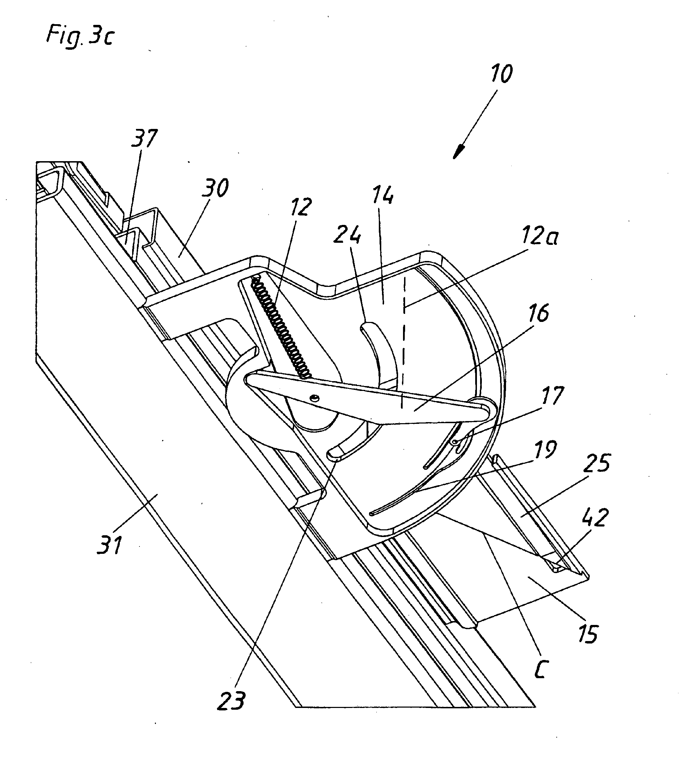

In Fig. 2b ist eine Explosionsdarstellung einer Schubladenausziehführung 29 gezeigt, wobei zwischen Korpusschiene 31 und Ladenschiene 30 eine Dämpfvorrichtung 13 wirkt. Eine solche Dämpfvorrichtung 13 kann natürlich auch beim ersten Ausführungsbeispiel in ähnlicher oder gleicher Art und Weise verwendet werden. Im Unterschied zum ersten Ausführungsbeispiel wird das zweite Basiselement 15 an der Ladenschiene 30 befestigt und weist eine vertikal federbelastete Weiche 25 in Form einer Zungenfeder auf. Das erste Basiselement 14 ist an der Korpusschiene 31 angebracht und weist an seiner Unterseite ein an der Schwenkachse S schwenkbar gelagertes Steuerelement 16 auf, welches über den Begrenzungszapfen 22 zwischen den Anschlägen 23 und 24 begrenzt schwenkbar gelagert ist. Der Begrenzungszapfen 22 bildet gleichzeitig das Antriebselement 20 für das zweite Basiselement 15, wobei an dessen Unterseite (siehe Fig. 3c) die noch nicht dargestellte Führungsbahn 21 ausgebildet ist, in welche der Begrenzungszapfen 22 / Antriebselement 20 eingreift. Das Steuerelement 16 ist durch die Spiralfeder 12 beaufschlagt und weist im vorderen Bereich ein schwenkbar gelagertes Verriegelungselement 17 auf, welches in eine an der Unterseite des ersten Basiselements 14 ausgebildete Ver- und Entriegelungsbahn 19 eingreift (siehe Fig. 3c).

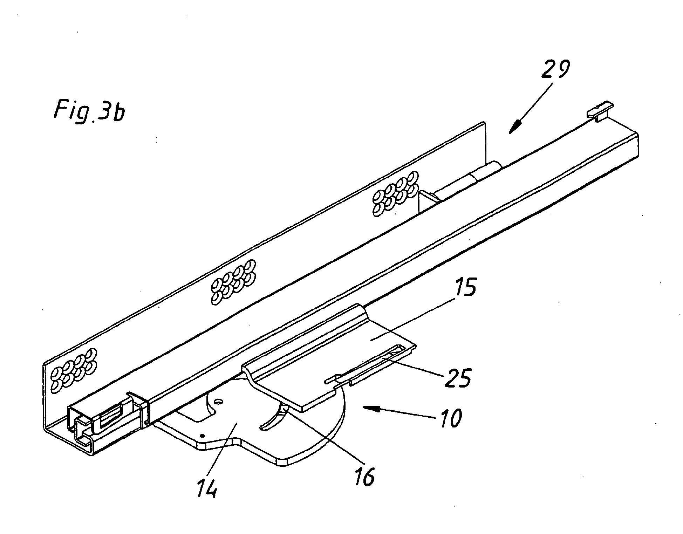

Fig. 3b zeigt die Schubladenausziehführung 29 mit daran montierter und zusammengesetzter Antriebsvorrichtung 10.

In Fig. 3c ist dazu passend eine Unteransicht der Antriebsvorrichtung 10 gezeigt, wobei die Ablenkschräge 42 der Weiche 25 dargestellt ist, welche das Antriebselement 20 in Richtung Spannabschnitt C ablenkt. Als alternative Ausführung der vorliegenden Erfindung ist in dieser Fig. 3c durch Strichlierung eine zweite Feder 12a zur Bildung eines Federpakets eingezeichnet, der das Steuerelement 16 zusätzlich beaufschlagen könnte. Dieser könnte seine Wirkung - je nach Ausbildung und Anordnung - beispielsweise hauptsächlich beim Einziehen oder Ausstoßen entfalten und somit den jeweils unterstützten Vorgang verbessern bzw. leichtgängiger machen.

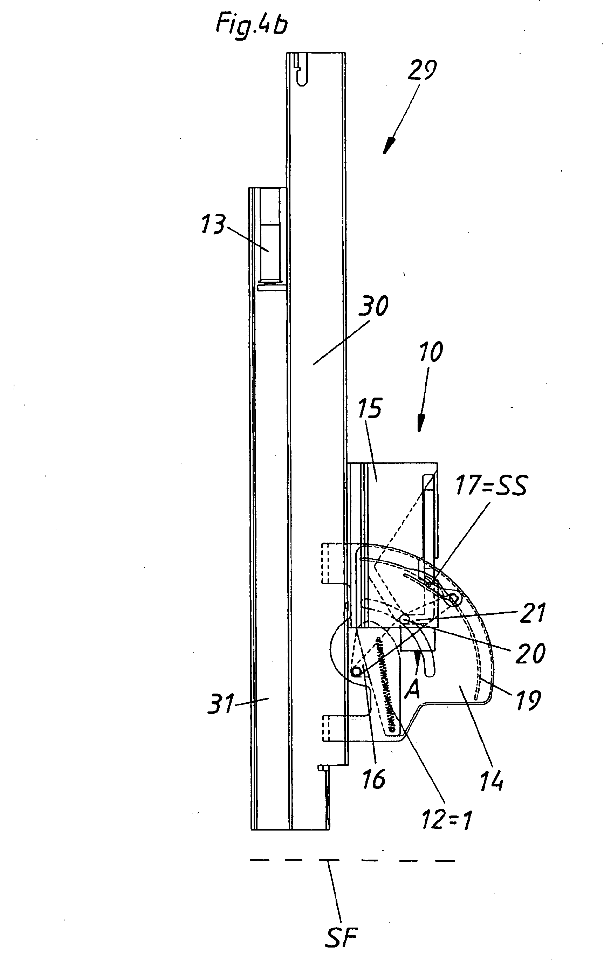

Gegenüber dem ersten Ausführungsbeispiel der vorliegenden Antriebsvorrichtung 10 ist in den Fig. 4b bis 13b die strichliert dargestellte Schubladenfront im unteren Bereich der jeweiligen Figur. Weiters stellen die Fig. 4b bis 13b - im Gegensatz zu den Fig. 4a bis 13a - eine Ansicht von oben auf die Antriebsvorrichtung 10 dar.

In Fig. 4b befindet sich das Verriegelungselement 17 in Schließstellung SS im herzkurvenförmigen Abschnitt 18 der Ver- und Entriegelungsbahn 19. Die Feder 12 befindet sich in der ersten, mittleren Federspannung 1.

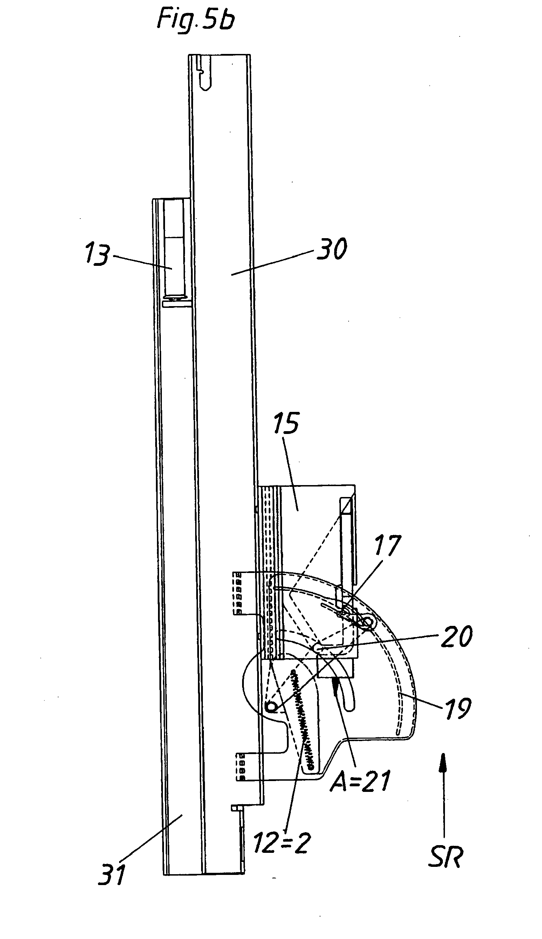

Durch Überdrücken der Schublade 11 in Schließrichtung SR entriegelt das Verriegelungselement 17 und die Feder 12 befindet sich in der leicht erhöhten Federspannung 2 (siehe Fig. 5b).

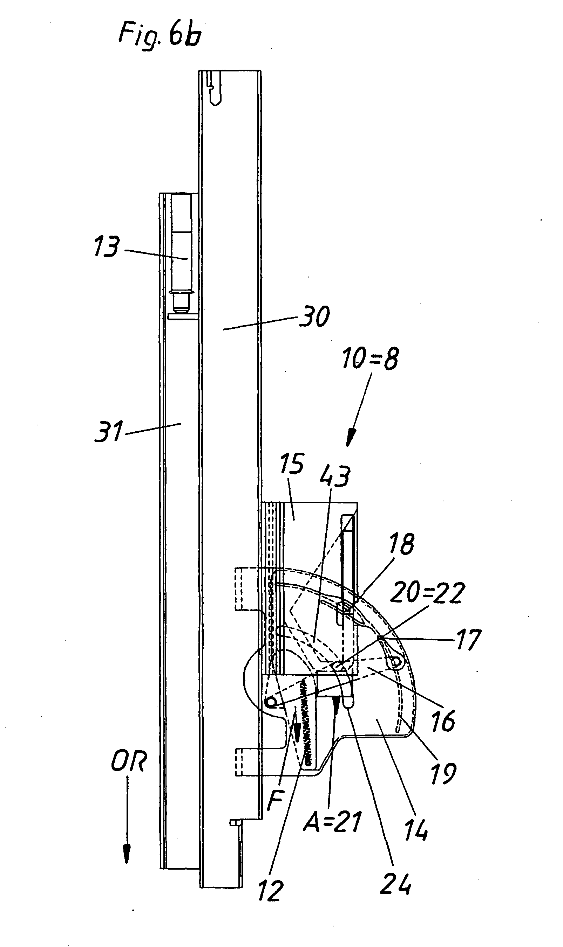

In Fig. 6b wird die Ladenschiene 30 durch die Führungsbahn 21 im zweiten Basiselement 15 und dessen Ausstoßabschnitt A über das Antriebselement 20 ausgestoßen, wobei das Antriebselement 20 durch Entspannen der Feder 12 in Richtung der Federkraft F in der Schwenkbahn 43 des Begrenzungszapfens 22 in Richtung Anschlag 24 bewegt wird. Somit dient die Feder 12 als Kraftgeber für die als Ausstoßvorrichtung 8 fungierende Antriebsvorrichtung 10.

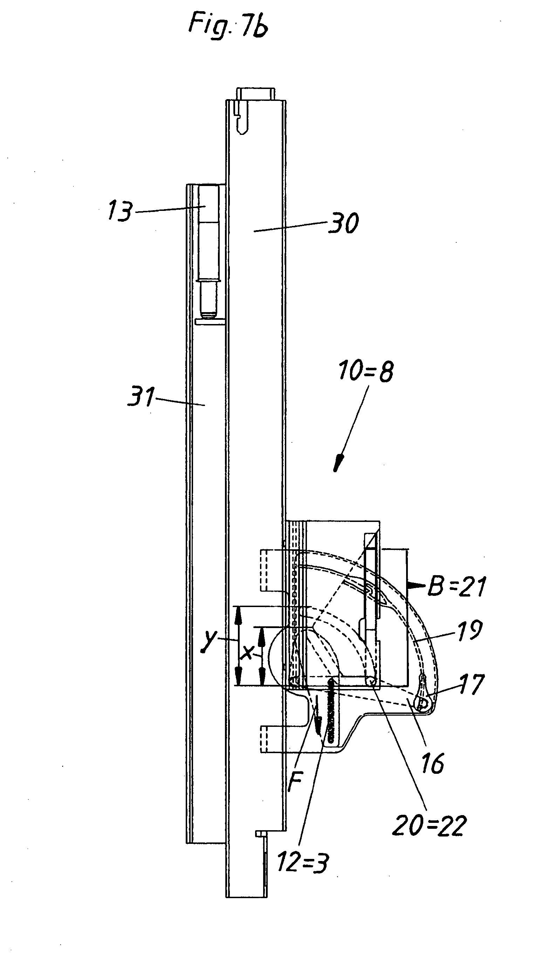

In Fig. 7b erreicht die Feder 12 die entspannte Federspannung 3 und das Antriebselement 20 erreicht den Freilaufabschnitt B der Führungsbahn 21.

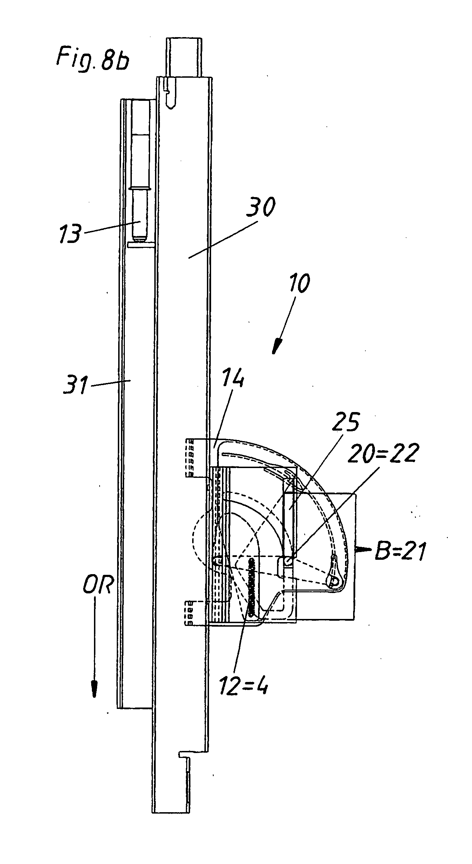

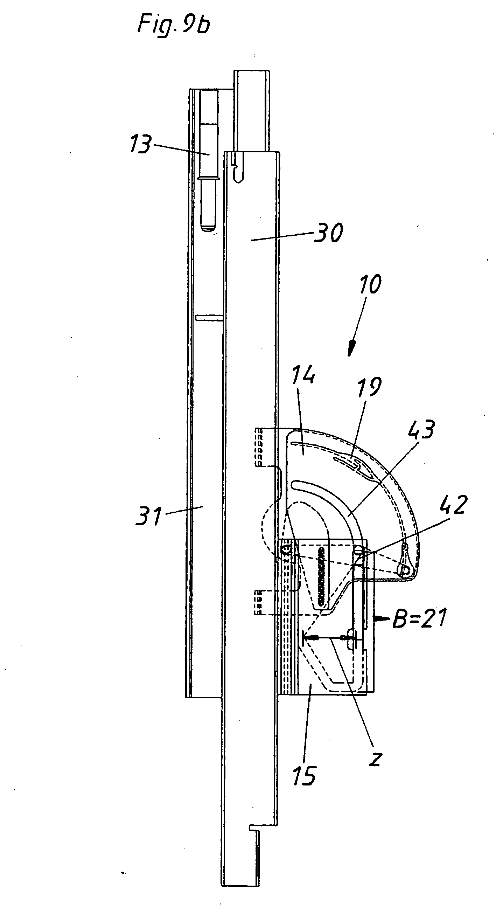

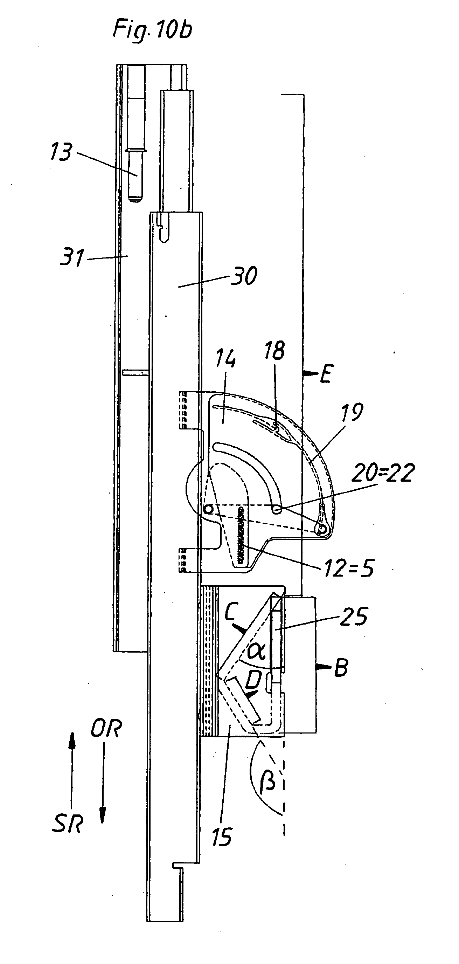

In diesem Bereich kann das bewegbare Möbelteil 11 bzw. das zweite Basiselement 15 frei in Öffnungsrichtung OR bewegt werden, während sich die Feder 12 weiter in der entspannten Federspannung 4 befindet (Fig. 8). Wenn dabei das Antriebselement 20 entlang der Weiche 25 gleitet, so wird diese Weiche 25 entgegen der Federkraft F vertikal nach oben gedrückt, sodass das Antriebselement von der Stellung in Fig. 9b in den weiteren Freilaufabschnitt E in Fig. 10b gelangt. In dieser Fig. 10b sind die bevorzugten Winkel α und β für den Spannabschnitt C und den Einziehabschnitt D dargestellt.

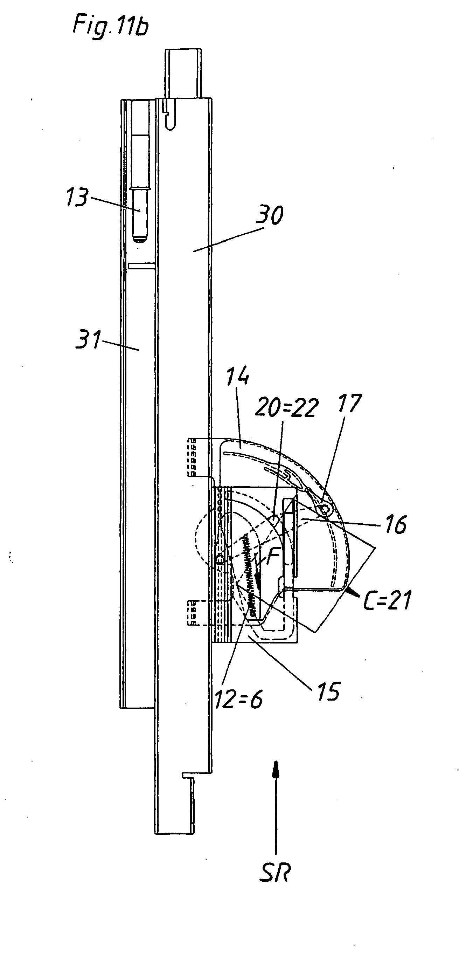

Beim Bewegen des Möbelteils 11 in Schließrichtung (siehe Fig. 11b) wird das Antriebselement 20 von der Ablenkschräge 42 in den Spannabschnitt C abgelenkt, wodurch sich das Steuerelement 16 entgegen der Wirkung der Federkraft F der Feder 12 (sich erhöhende Federspannung 6) verschwenkt.

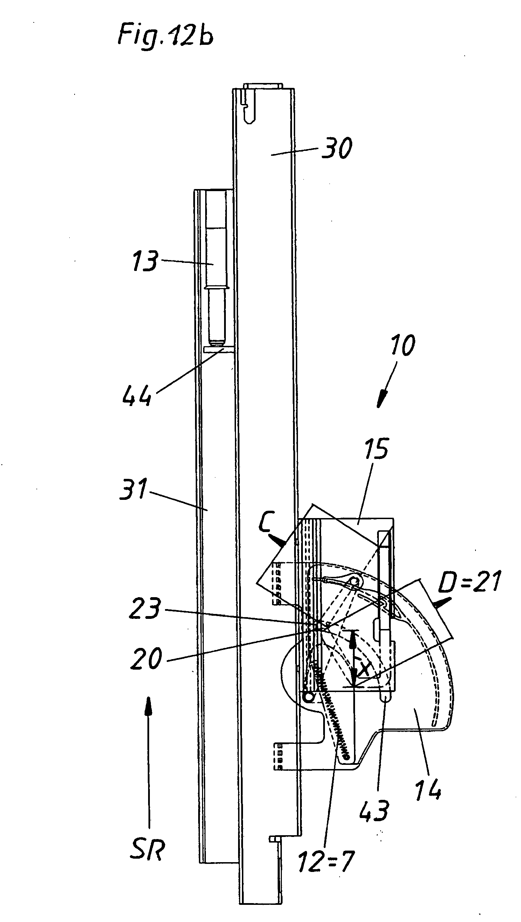

In Fig. 12b erreicht das Antriebselement 20 den Höhepunkt bzw. den Übergang zwischen Spannabschnitt C und Einziehabschnitt D, wobei das Antriebselement 20/Begrenzungszapfen 22 gleichzeitig den Anschlag 23 der Schwenkbahn 43 erreicht und die Feder 12 die dritte, höchste Federspannung 7 erreicht. Zu diesem Zeitpunkt schlägt auch der Fortsatz 44 der Ladenschiene 30 an der Dämpfvorrichtung 13 an. Die Führungsbahn 21 "knickt" beim Übergang zwischen Abschnitt C um ca. 40° bis 80°, vorzugsweise zwischen 50° und 70°, ein.

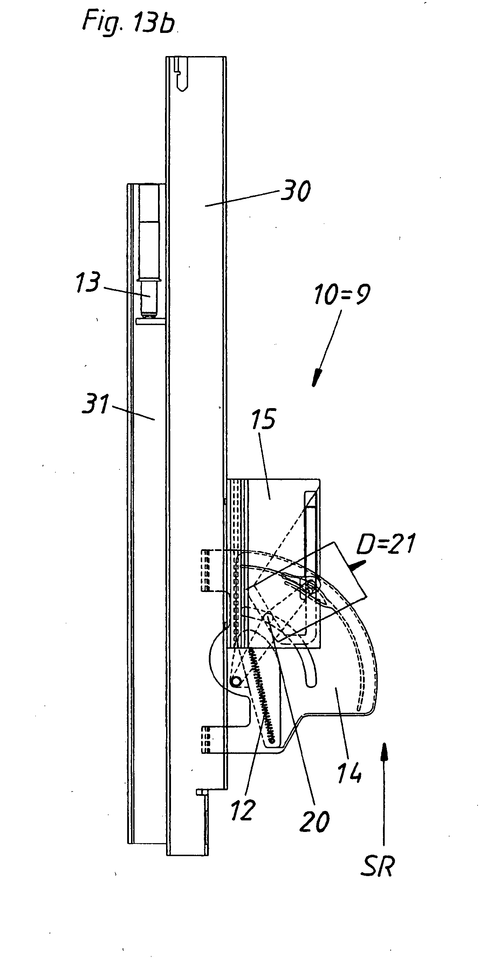

Sobald der höchste Punkt des Spannabschnittes C überwunden ist, gelangt das Antriebselement 20 in den Einflussbereich des Einziehabschnittes D, in welchem sich die Feder 12 unter Verschwenken des Steuerelementes 16 zusammenzieht und dabei das zweite Basiselement 15 gegenüber dem ersten Basiselement 14 in Schließrichtung SR bewegt, wobei diese Bewegung durch die Dämpfvorrichtung 13 gedämpft werden kann. Somit fungiert auch gemäß diesem zweiten Ausführungsbeispiel und dort gemäß der Fig. 13b die Feder 12 als Einziehkraft für die - die Funktion einer Einzugsvorrichtung 9 übernehmende - Antriebsvorrichtung 10.

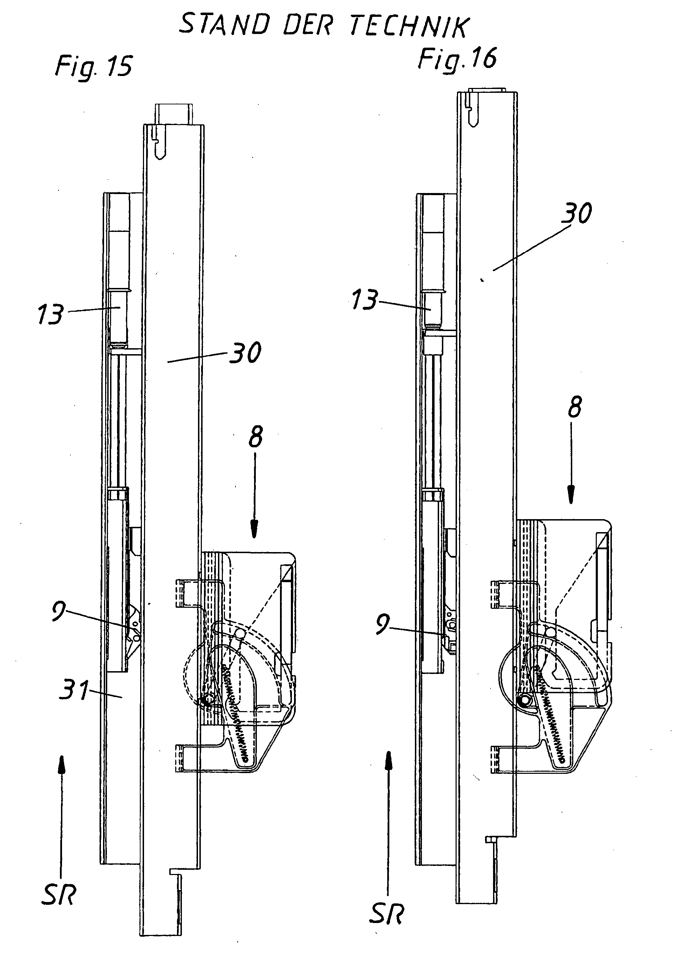

Die Fig. 15 und 16, die den Stand der Technik getrennt ausgebildeter Ausstoßvorrichtungen 8 und Einzugsvorrichtungen 9 gemäß der WO 2007/028177 A1 zeigen, wurden schon im einleitenden Teil der vorliegenden Beschreibung entsprechend gewürdigt.

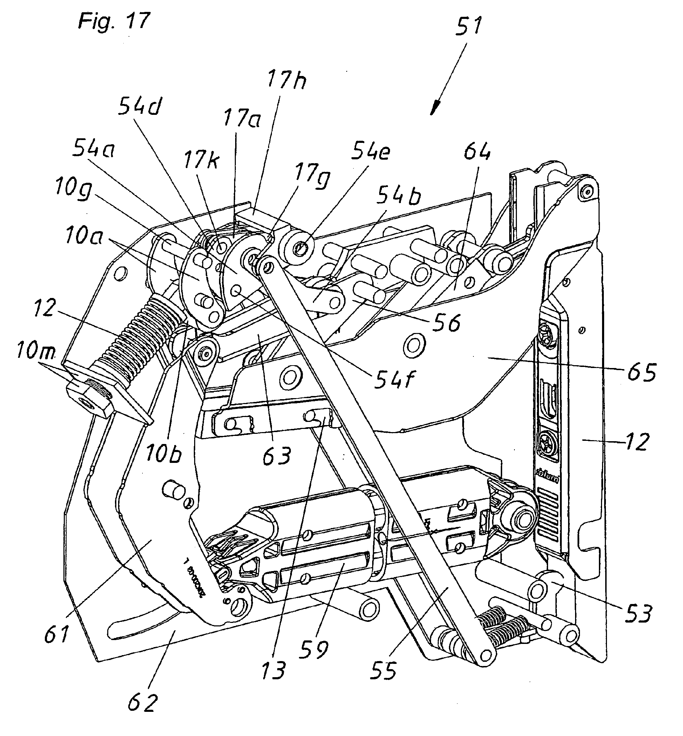

Ab Fig. 17 ist ein drittes Ausführungsbeispiel einer erfindungsgemäßen Antriebsvorrichtung 10 gezeigt, die Teil eines Möbelantriebes 51 für eine nicht dargestellte Möbelklappe ist. Dabei ist die Antriebsvorrichtung 10 sowie eine Verbindungsvorrichtung 54 in eine - an sich bekannte - Stellarmanordnung (wie sei beispielsweise aus der WO 2011/020130 A1 oder der DE 20 2005 021 541 U1 hervorgeht) für die Möbelklappe integriert und diese ist wiederum an einer Montageplatte 62 befestigt.

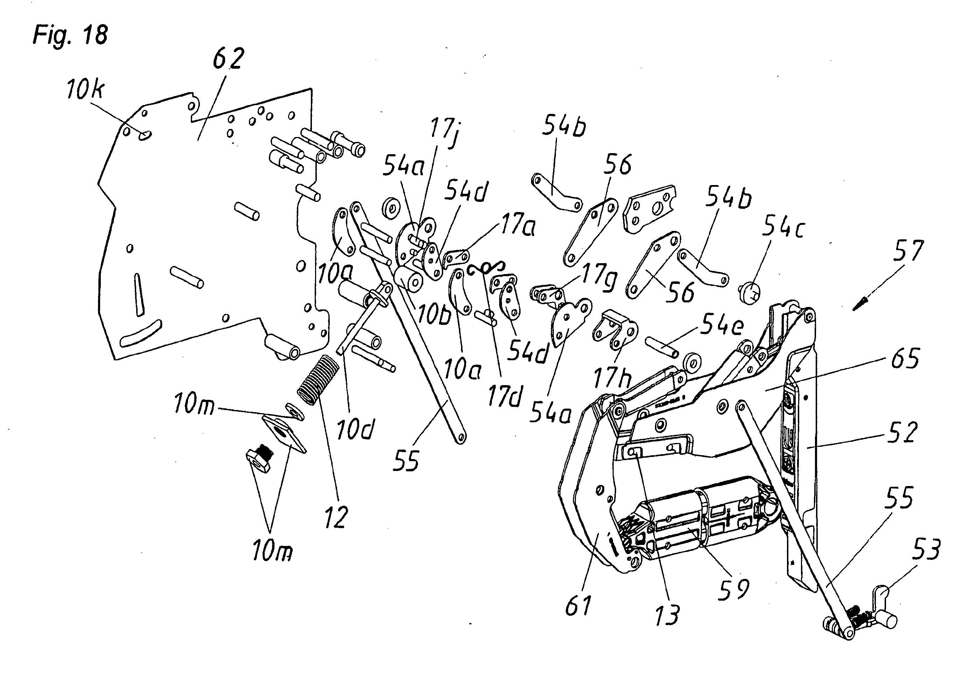

In Fig. 18 ist eine Explosionsdarstellung von Fig. 17 gezeigt, wobei sämtliche wesentliche Komponenten mit einem Bezugszeichen versehen sind. Einige nebensächliche Komponenten wie z.B. Verbindungsbolzen oder Ähnliches weisen kein Bezugszeichen auf. Die Erklärung des Funktionsprinzips ist aber auch ohne direkte Benennung dieser Komponenten mit Bezugszeichen möglich. In den beiden Fig. 17 und 18 ist der Stellarm 52 in geschlossener Stellung gezeigt.

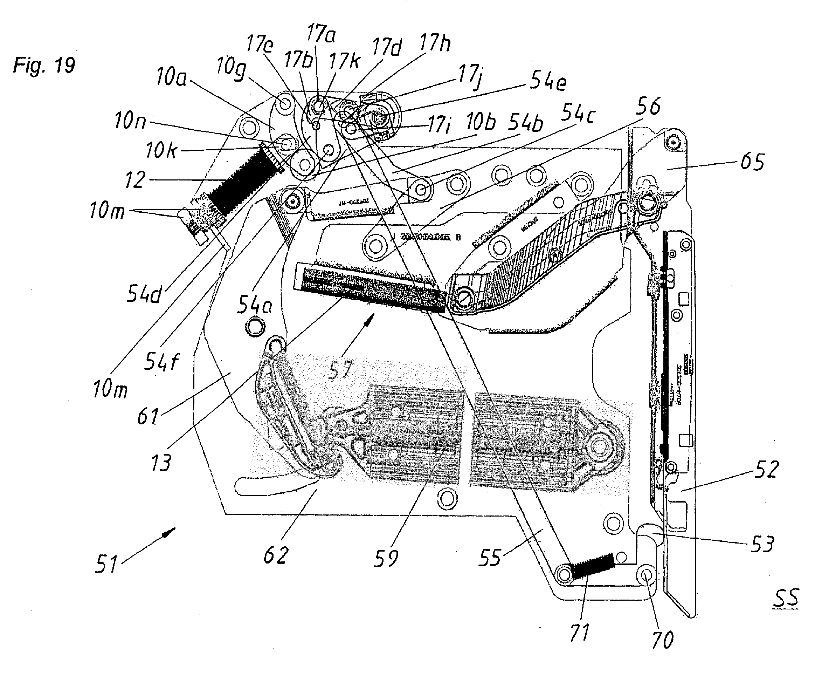

In den Fig. 19 bis 26 ist der Möbelantrieb 51 ohne Möbelkorpus und Möbelklappe (bewegbares Möbelteil) gezeigt. Dieser Möbelantrieb 51 wird über die Montageplatte 62 an einer Seitenwand eines Möbelkorpus 26 befestigt und bewegt über eine Stellarmanordnung und einen Stellarm 52 eine Möbelklappe. Bevorzugt ist diese Möbelklappe um eine horizontale Schwenkachse verschwenkbar.

In Fig. 19 befindet sich der Stellarm 52 (und somit auch die nicht dargestellte Möbelklappe) in Schließstellung SS. Dabei liegt das Auslöseelement 53 am Stellarm 52 oder an der Möbelklappe selbst an. Dieses Auslöseelement 53 ist über die zur Montageplatte 62 ortsfeste Schwenkachse 70 mit dem Übertragungsmechanismus 55, in diesem Falle einstückig, verbunden. Die Feder 71 (Zugfeder) beaufschlagt den Übertragungsmechanismus 55 derart, dass dieser sich immer im Uhrzeigersinn um die Schwenkachse 70 bewegen will. An seinem Ende ist der Übertragungsmechanismus 55 über einen Verbindungsbolzen 17i mit einem Entriegelungselement 17h verbunden. Dieses Entriegelungselement 17h ist um die Ausstoßschwenkachse 54e schwenkbar. Ebenfalls um die Ausstoßschwenkachse 54e ist der Teil 17g eines Knickhebels schwenkbar. Am anderen Ende ist dieser Teil 17g über den Knickhebelbolzen 17j mit dem Verriegelungshebel 17a verbunden. Gemeinsam bilden 17j, 17g und 17a den Knickhebel. Um den Knickhebelbolzen 17j ist eine Verriegelungsfeder 17d geschwungen, die den Knickhebelbolzen 17j gegenüber der Ausstoßschwenkachse 54e und dem Haltenasenbolzen 17k nach oben drücken will. In dieser Darstellung gemäß Fig. 19 liegt der Knickhebelbolzen 17j leicht oberhalb einer gedachten Linie zwischen der Ausstoßschwenkachse 54e und dem Haltenasenbolzen 17k. Die weitere Bewegung des Knickhebelbolzens 17j nach oben wird dadurch verhindert, dass die Haltenase 17b des Verriegelungshebels 17a am Verriegelungszapfen 17e ansteht. Dieser Verriegelungszapfen 17e ist an der Spannkurve 54d angeordnet. Diese Spannkurve 54d wiederum ist einerseits über den Haltenasenbolzen 17k mit dem Verriegelungshebel 17a und andererseits über die Spannkurvenschwenkachse 54f mit dem Anstoßhebel 54a verbunden. Dieser Anstoßhebel 54a wiederum ist um die Ausstoßschwenkachse 54e verschwenkbar gelagert. Zudem ist dieser Anstoßhebel 54a über den Ausstoßbolzen 54g mit dem Verbindungshebel 54b verbunden. Dieser wiederum ist über den Verbindungszapfen 54c mit dem Element 56 des Hebelwerkes 57 verbunden, wodurch die Bewegungen des Elementes 56 und des Anstoßhebels 54a ständig korrespondieren.

Die Feder 12 (Druckfeder) ist über die Montageelemente 10m an einem Ende mit der Montageplatte 62 fest verbunden. Am anderen Ende ist die Feder 12 mit einem Führungszapfen 10n verbunden, der wiederum in einer Führungsbahn 10k in der Montageplatte 62 geführt ist. Zudem ist die Feder 12 über den Führungszapfen 10n mit dem Ausstoßhebel 10a verbunden, der wiederum um die mit der Montageplatte 62 verbundene fixe Schwenkachse 10g schwenkbar ist. Am rechten unteren Ende weist der Ausstoßhebel 10a eine Druckrolle 10b auf, die im leicht eingesenkten Bereich zwischen Anstoßhebei 54a und Spannkurve 54d anliegt. In dieser Schließstellung SS drückt die Kraft der Feder 12 über die Druckrolle 10b auf die Spannkurve 54b. Da in weiterer Folge über den Haltenasenbolzen 17k Kraft auf den Verriegelungshebel 17a gelangt, wird der Knickhebelbolzen 17j in Schließstellung SS so weit nach oben gedrückt, wie es der Anschlag der Haltenase 17b am Verriegelungszapfen 17e erlaubt.

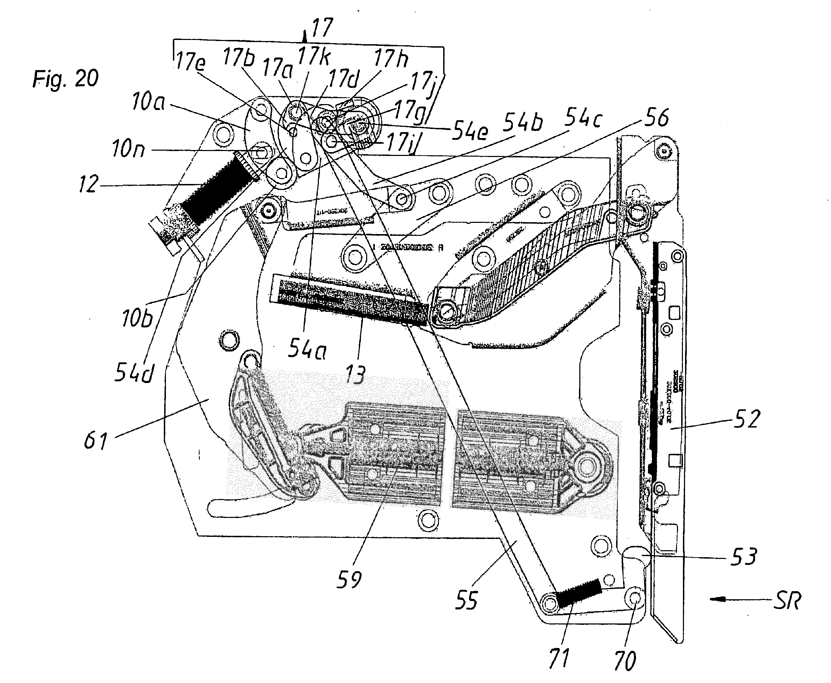

Wenn nun - wie in Fig. 20 dargestellt - in Schließrichtung SR auf die Möbelklappe bzw. auf den Stellarm 52 gedrückt wird, so wird das Auslöseelement 53 ebenfalls in Schließrichtung SR gedrückt und der Übertragungsmechanismus 55 wird gegen die Wirkung der Feder 71 um die Schwenkachse 70 geschwenkt, wodurch wiederum in weiterer Folge über den Verbindungsbolzen 17i das Entriegelungselement 17h gegen den Uhrzeigersinn um die Ausstoßschwenkachse 54 bewegt wird. Dadurch gelangt das Entriegelungselement 17h in Anschlag mit dem hinteren Teil 17g des Knickhebels und bewegt dadurch den Knickhebelbolzen 17j unter die gedachte Linie zwischen Ausstoßschwenkachse 54e und Haltenasenbolzen 17k. Dies erfolgt zudem gegen die Federkraft der Verriegelungsfeder 17d. Sobald der Knickhebelbolzen 17j unter die gedachte Linie gelangt, wirkt die Federkraft der Öffnungsfeder 12 über die Druckrolle 10b und die Spannkurve 54d nicht mehr verriegelnd auf den Verriegelungshebel 17a und die Haltenase 17b, sondern knickt den Knickhebel gegen die Federkraft der Feder 17d ein. Die Teile mit den Bezugszeichen 17a, 17b, 17d, 17e, 17g, 17h, 17i, 17j und 17k bilden gemeinsam eine Verriegelungsvorrichtung 17, welche dem Verriegelungselement 17 der ersten beiden Ausführungsbeispiele entspricht.

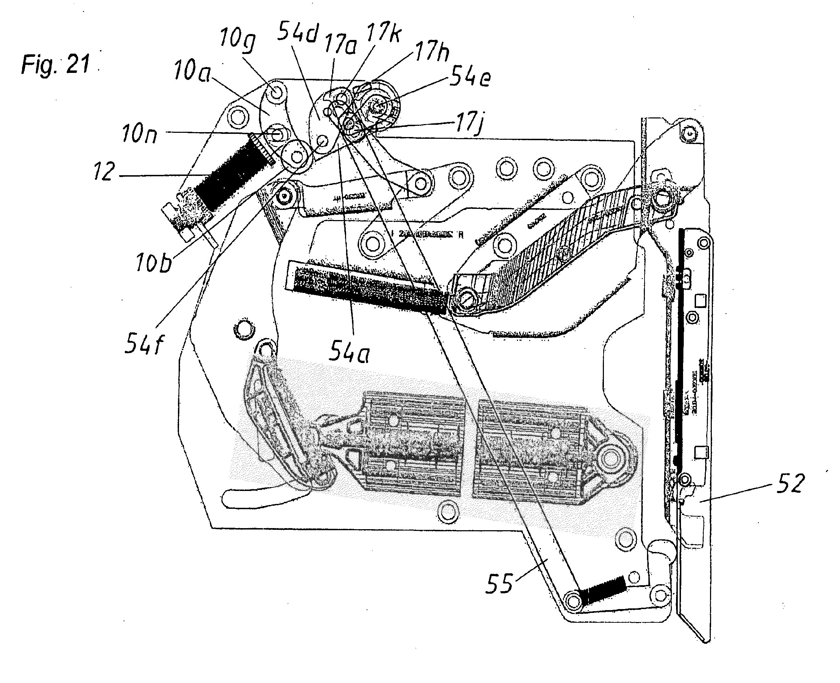

Durch das Entriegeln gelangt der Knickhebel in die komplett eingeknickte Stellung gemäß Fig. 21, in welcher der Knickhebelbolzen 17j deutlich unter der gedachten Linie zwischen Ausstoßschwenkachse 54e und Haltenasenbolzen 17k zum Stehen kommt. Gleichzeitig mit dem Einknicken des Knickhebels wird auch die Spannkurve 54d um die Spannkurveschwenkachse 54f im Uhrzeigersinn verschwenkt, sodass die linksseitigen Ränder (Kurven) der Spannkurve 54d und des Anstoßhebels 54a genau übereinander zu liegen kommen und sich darstellungstechnisch überdecken. Gleichzeitig mit dem Einschwenken der Spannkurve 54d beginnt sich auch die Druckrolle 10b unter Entspannung der Feder 12 abzurollen, wodurch der Anstoßhebel 54a um die Ausstoßschwenkachse 54e gegen den Uhrzeigersinn gedreht wird.

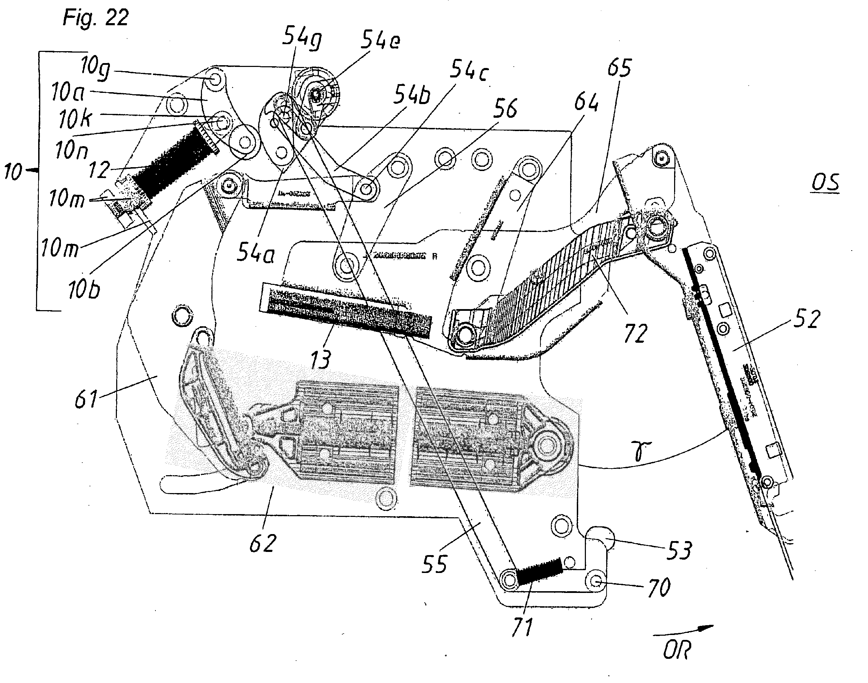

Dadurch wird die Offenstellung OS gemäß Fig. 22 erreicht, in welcher der Stellarm 52 mit dem Öffnungswinkel γ dargestellt ist. Diese Öffnungsbewegung erfolgt dadurch, dass mit dem Verschwenken des Anstoßhebels 54a auch der Verbindungshebel 54b bewegt wird und ein Verschwenken des Elements 56 des Hebelwerks 57 auslöst. Durch dieses Verschwenken des Elements 56 wird in weiterer Folge der Hebel 65 des Hebelwerks 57 nach rechts bewegt und der Stellarm 52 samt Möbelklappe öffnet sich. Die Hauptfeder 59 ist in dieser Darstellung gemäß Fig. 22 bereits etwas entspannt gegegenüber der Darstellung gemäß Fig. 21. Mit dem Ausstoßen wird der Totpunkt in der Hauptmechanik (Stellarmanordnung mit Hauptfeder 59) überwunden. Die Dämpfvorrichtung 13 liegt nicht mehr am Hebel 72 des Hebelwerks 57 an. Aufgrund der Rückstellfeder 71 hat sich der Übertragungsmechanismus 55 wieder um die Schwenkachse 70 verschwenkt, wodurch das Auslöseelement 53 wie auch das Entriegelungselement 17h wieder in Ausgangsstellung (wie in Fig. 19) bewegt wurde. In Fig. 22 bilden die Teile mit den Bezugszeichen 10a, 10b, 10g, 10k, 10m, 10n und 12 die Antriebsvorrichtung 10, die als Ausstoßvorrichtung 8 und auch als Einzugsvorrichtung 9 fungieren kann.

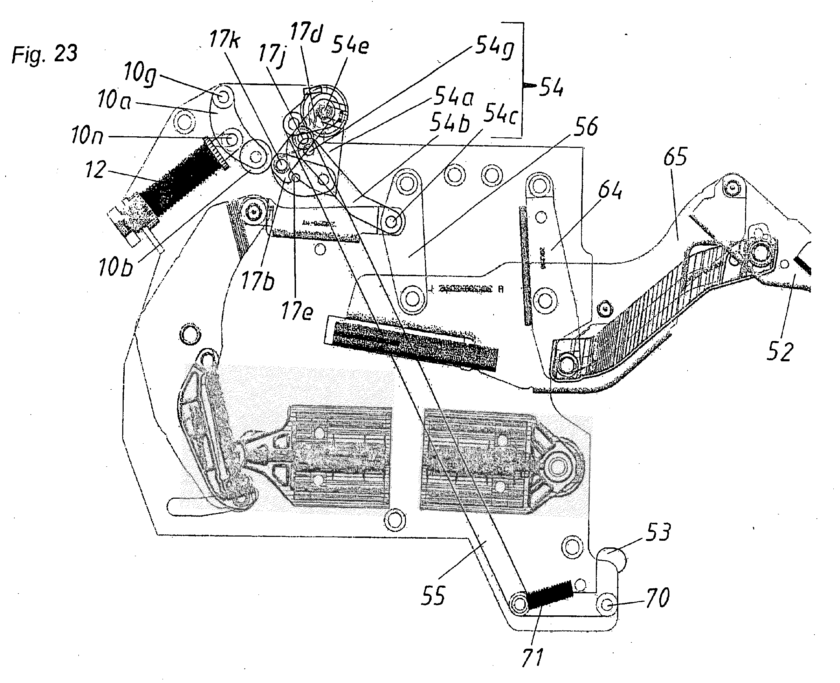

Nachdem sich die Feder 12 komplett entspannt hat (wie in Fig. 22), wird die Möbelklappe von Hand weiter in Öffnungsrichtung OR bewegt. Da bei dieser weiteren Bewegung keine Federkraft F mehr von der Feder 12 über den Ausstoßhebel 10a und dessen Druckrolle 10b auf die Spannkurve 54d wirkt, kann sich die Verriegelungsfeder 17d entspannen und drückt den Knickhebel in die Stellung gemäß Fig. 23. Dabei liegt der Knickhebelbolzen 17j wieder über der gedachten Linie zwischen Ausstoßschwenkachse 54e und Haltenasenbolzen 17k und die Haltenase 17b liegt am Verriegelungszapfen 17e an.

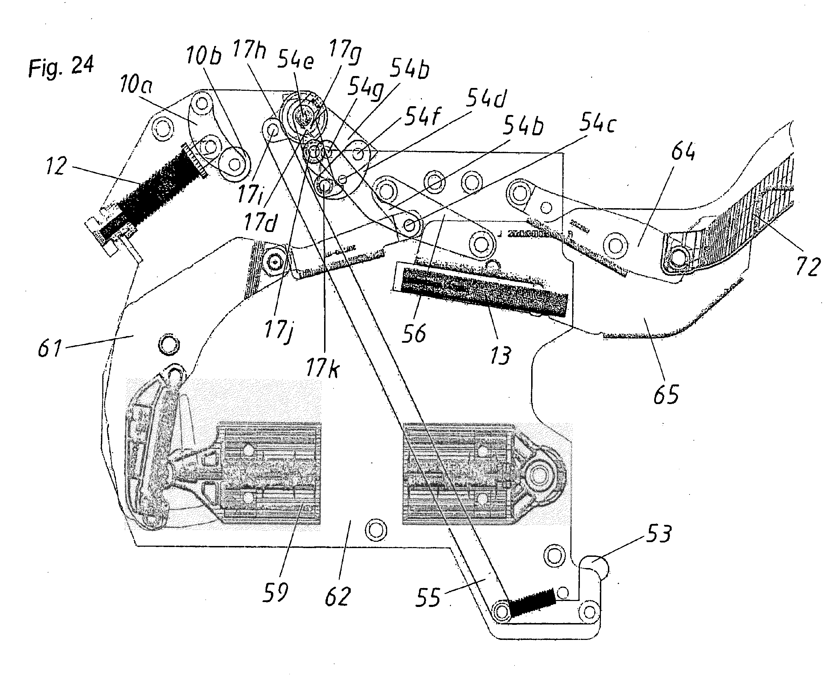

Wenn nun die Möbelklappe weiter in Öffnungsrichtung OR bewegt wird (siehe Fig. 24), gelangt die Spannkurve 54d außer Eingriff mit der Druckrolle 10b und die komplette Offenstellung ist erreicht.

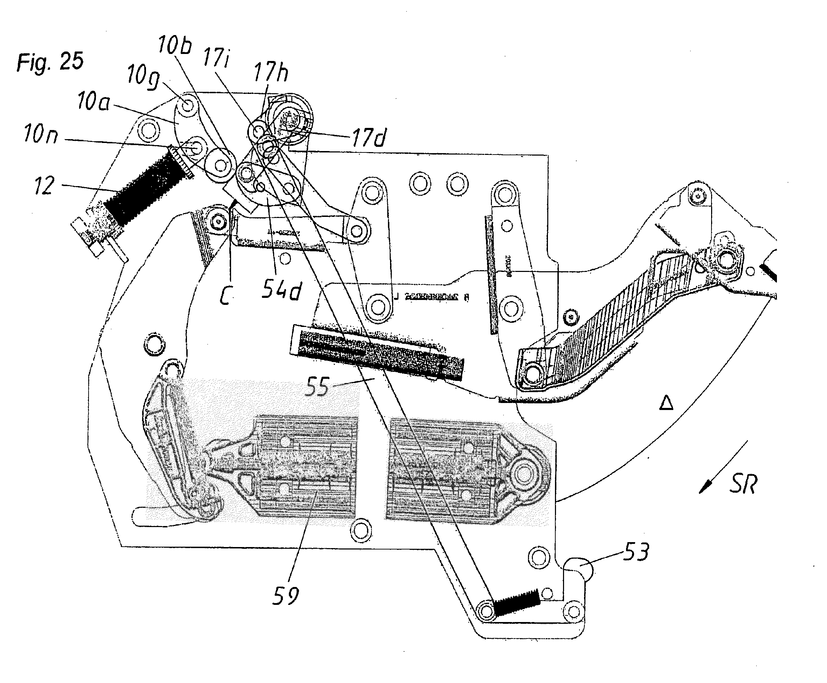

In Fig. 25 wird das bewegbare Möbelteil 11 (Möbelklappe) in Schließrichtung SR bewegt, wobei im Öffnungswinkelbereich Δ das Spannen der Feder 12 beginnt. Das Spannen beginnt dadurch, dass die durch den Verriegelungshebel 17a und die Haltenase 17b verriegelte Spannkurve 54d über dessen Spannabschnitt C an der Druckrolle 10b anliegt und über den Ausstoßhebel 10a die Feder 12 eindrückt und somit spannt.

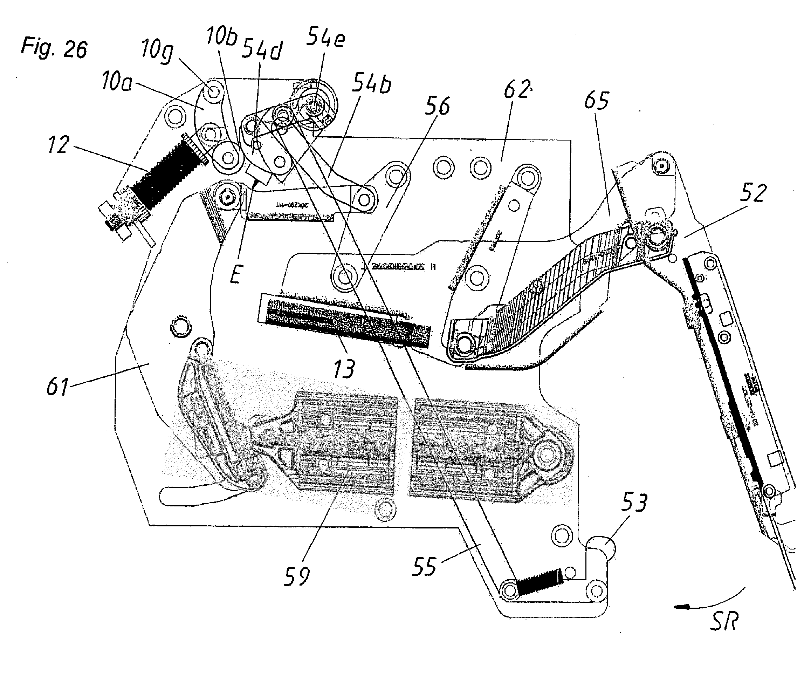

Dieses Spannen erfolgt so lange, bis die Druckrolle 10b den höchsten Punkt der Spannkurve 54d erreicht hat und in den Einziehabschnitt E gelangt. Mit dem Erreichen dieses Einziehabschnittes E kann sich die Feder 12 leicht entspannen (Bewegen von Fig. 26 zu Fig. 19) und zieht somit im letzten Schließabschnitt aktiv die bewegbare Möbelklappe ein. Das heißt, durch das Überfahren des Höhepunkts der Spannkurve 54d wird der Verbindungshebel 54b aktiv im Uhrzeigersinn um die Ausstoßschwenkachse 54e gedreht, sodass eine Einziehwirkung auf den Stellarm 52 gegeben ist. Diese Entspannung erfolgt allerdings nur so lange, bis die Druckrolle 10b in die Senke zwischen der Spannkurve 54d und dem Verbindungshebel 54b gelangt. Dadurch ist wieder die Schließstellung SS gemäß Fig. 19 erreicht. Beim Einziehen kann auch noch die Dämpfvorrichtung 13 ein leichtes Dämpfen der von der Feder 12 ausgelösten Einziehbewegung ermöglichen.

Im Bereich der Ausstoßschwenkachse 54e kann eine Synchronisationsstange befestigt sein, die die Drehbewegung zu einer, vorzugsweise spiegelsymmetrischen, Hebelmechanik auf einer anderen Seite des Möbelkorpus 26 überträgt.

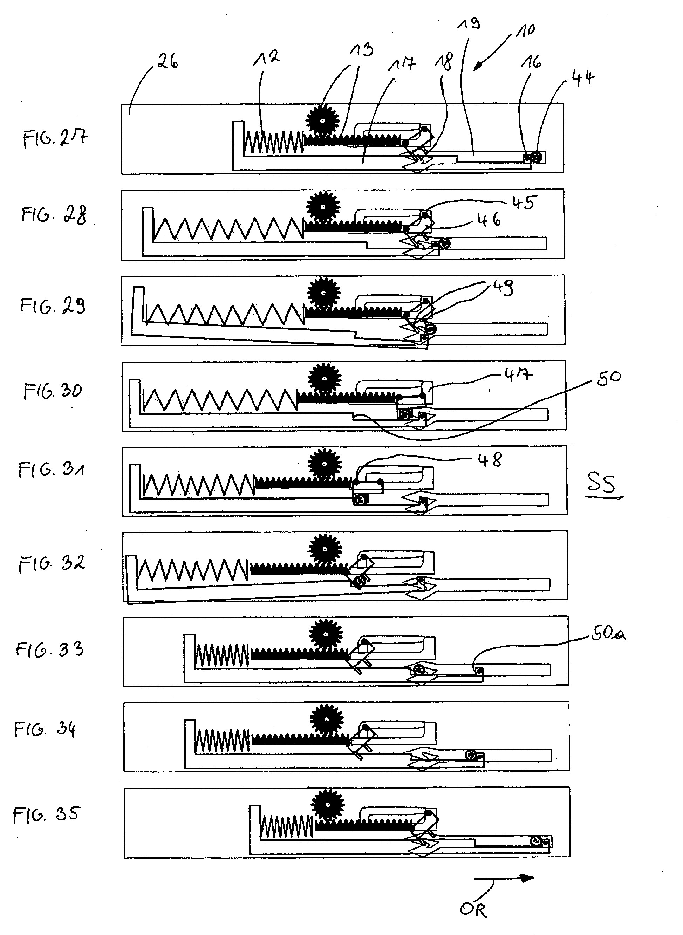

Ein viertes Ausführungsbeispiel der vorliegenden Erfindung wird in den Fig. 27 bis 35 dargelegt. Diese zeigen rein schematisch den Bewegungsablauf in einer Antriebsvorrichtung 10 beim Schließen, Einziehen und Ausstoßen eines bewegbaren Möbelteils 11. In sämtlichen Figuren ist vom bewegbaren Möbelteil 11 lediglich der diesem bewegbaren Möbelteil 11 zugeordnete Mitnehmer 44 dargestellt.

In Fig. 27 ist dieser Mitnehmer 44 beim Schließen des bewegbaren Möbelteils in dem Moment dargestellt, in welchem er am Verriegelungselement 17 anschlägt. Dieses Verriegelungselement 17 ist am Möbelkorpus 26 bewegbar gelagert. Am Verriegelungselement 17 befindet sich ein Steuerelement 16, welches in einer Ver- und Entriegelungsbahn 19 verfährt. Diese Ver- und Entriegelungsbahn 19 weist einen herzkurvenförmigen Abschnitt 18 auf. Die Ver- und Entriegelungsbahn 19 ist gegenüber dem Möbelkorpus 26 ortsfest. Das Verriegelungselement 17 ist an einem Ende mit der Feder 12 (Zugfeder) verbunden. Diese Feder wiederum ist über eine Dämpfvorrichtung 13 (Rotationsdämpfer mit Zahnstange und Zahnrad) verbunden, wobei dieser Rotationsdämpfer an einem Ende mit einem Verriegelungsschlitten 46 verbunden ist. Dieser Verriegelungsschlitten 46 ist über die Verriegelungszapfen 45 und 48 in einer Haltebahn 47 gehalten bzw. je nach Position verfahrbar. Die Haltebahn 47 ist gegenüber dem Möbelkorpus 26 ortsfest.

Wenn nun das bewegbare Möbelteil 11 und somit der Mitnehmer 44 von der Stellung gemäß Fig. 27 in die Stellung gemäß Fig. 28 in Schließrichtung SR bewegt wird, wird die Feder 12 gespannt bzw. geladen.

Bei weiterer Bewegung in Schließrichtung (Fig. 29) wird das Steuerelement 16 von der Ver- und Entriegelungsbahn 19 abgelenkt und das Steuerelement 16 gelangt in die verriegelte Stellung (Fig. 30) im herzkurvenförmigen Abschnitt 18 der Ver- und Entriegelungsbahn 19. Während das Steuerelement 16 in die Verriegelungsstellung gelangt, gelangt der Mitnehmer 44 außer Eingriff mit dem Verriegelungselement 17 und gelangt zwischen die Fangelemente 49 des Verriegelungsschlittens 46. Da das bewegbare Möbelteil 11 und somit der Mitnehmer 44 weiter in Schließrichtung SR bewegt wird, wird der Verriegelungsschlitten 46 (insbesondere dessen erster Verriegelungszapfen 45) aus der Verriegelungsposition in der Haltebahn 47 (siehe Fig. 29) in eine entriegelte Position (siehe Fig. 30) bewegt. Durch diese Entriegelung ist das rechte Ende der Feder 12 nicht mehr durch den Verriegelungsschlitten 46 verriegelt und die Feder 12 kann sich zusammenziehen, wodurch die Feder 12 den Mitnehmer 44 und somit das bewegbare Möbelteil von der Stellung gemäß Fig. 30 in die Schließstellung SS gemäß Fig. 31 bewegt/einzieht. Somit fungiert in diesem Bereich die Antriebsvorrichtung 10 als Einzugsvorrichtung 9 und die Feder 12 wirkt während ihres ersten Teils des Entspannungsweges EW1 einziehend. Die Einziehbewegung der Feder 12 wird durch die Dämpfvorrichtung 13 gedämpft.

Diese Einziehbewegung erfolgt solange, bis der Verriegelungsschlitten 46 und dessen zweiter Verriegelungszapfen 48 die Verriegelungsstellung gemäß Fig. 31 erreicht hat. In dieser Stellung ist der Mitnehmer 44 noch immer zwischen den Fangelementen 49 gefangen, liegt aber gleichzeitig am linken Begrenzungsanschlag 50 des Verriegelungselementes 17 an.

Wenn nun gemäß Fig. 32 in Schließstellung SS auf das bewegbare Möbelteil weiter in Schließrichtung SR gedrückt wird, erfolgt die Auslösung der Antriebsvorrichtung 10.

Durch Bewegen des Mitnehmers 44 durch das Überdrücken auf das bewegbare Möbelteil nach links wird der Begrenzungsanschlag 50 und mit diesem das Verriegelungselement 17 nach links bewegt. Dadurch gelangt zum einen das Steuerelement 16 aus dem herzkurvenförmigen Abschnitt 18 in deren Freilaufbereich der Ver- und Entriegelungsbahn 19. Zum anderen gelangt auch der Verriegelungsschlitten 46 - in diesem Fall durch Verschwenken in Folge einer entsprechenden Ausbildung der Haltebahn 47 - in eine Stellung in der der Mitnehmer 44 freigegeben wird.

Durch Entspannen der Feder 12 wird das Verriegelungselement 17 und über dessen Begrenzungsanschlag 50 der Mitnehmer 44 und somit das bewegbare Möbelteil 11 aktiv ausgestoßen und erreicht die Stellung gemäß Fig. 33. Somit dient die Antriebsvorrichtung 10 in diesem Bereich als Ausstoßvorrichtung 8, wodurch die Federkraft F im zweiten Teil des Entspannungsweges EW2 dem Ausstoßen des bewegbaren Möbelteils 11 dient.

Nachdem der Mitnehmer 44 die Position gemäß Fig. 33 erreicht hat, ist die Feder 12 vollkommen entspannt und das bewegbare Möbelteil 11 kann händisch in Öffnungsrichtung OR weiterbewegt werden.

Sobald bei dieser Bewegung der Mitnehmer 44 den rechten Begrenzungsanschlag 50a des Verriegelungselementes 17 erreicht (siehe Fig. 34) wird die Dämpfvorrichtung 13 gespannt und der Verriegelungsschlitten 46 erreicht die verriegelte Stellung gemäß Fig. 35. Die Ausbildung der Haltebahn 47 und des Verriegelungsschlittens 46 ist in den Darstellungen nur schematisch dargestellt, kann aber von einem Fachmann auf dem Gebiet von Möbelantrieben mit passenden Schwenkbahnen oder Verriegelungsabschnitten versehen sein. Vom rechten Begrenzungsanschlag 50a kann der Mitnehmer 44 durch nach unten Drücken des Verriegelungselementes 17 (ähnlich wie Fig. 29), durch eine Ablenkschräge oder durch passende Kraftverläufe auf die rechte Seite des Verriegelungselementes 17 gelangen, wodurch wieder die Ausgangsstellung gemäß Fig. 27 erreicht wird.

Grundsätzlich sei zu diesem vierten Ausführungsbeispiel ausgeführt, dass die Antriebsvorrichtung 10 auch dem bewegbaren Möbelteil 11 und dagegen der Mitnehmer 44 dem Möbelkorpus 26 zugeordnet sein könnte. Die Dämpfvorrichtung 13 muss nicht als Rotationsdämpfer, sondern kann beispielsweise auch als Fluiddämpfer ausgeführt sein. Die Dämpfvorrichtung 13 kann aber auch weggelassen werden, wodurch die Federkraft F der Feder 12 ungedämpft auf das bewegbare Möbelteil 11 wirken.

Somit zeigen alle Ausführungsbeispiele der vorliegenden Erfindung eine gegenüber dem Stand der Technik wesentlich verbesserte und vereinfachte Antriebsvorrichtung 10, die sowohl als Ausstoßvorrichtung 8 als auch als Einzugsvorrichtung 9 ausgebildet ist, wobei dieselbe Feder 12 als jeweiliger Kraftspeicher zum Einziehen und Ausstoßen fungiert. Es soll natürlich nicht ausgeschlossen werden, dass auch zwei parallele oder auch in unterschiedlichen Richtungen auf das Antriebselement 20 wirkende Federn 12, 12a in der Antriebsvorrichtung 10 vorgesehen sind. Wesentlich ist, dass diese zumindest eine Feder 12 während eines Teils seines Entspannungswegs EW1 dem Einziehen dient und während eines weiteren Teils des Federentspannungswegs EW2 dem Ausstoßen dient. Es soll auch nicht ausgeschlossen sein, dass - je nach Ausbildung - die Federentspannung EW1 von der höchsten Federspannung 7 zur mittleren Federspannung 1 dem Ausstoßen dient, während die weitere Entspannung EW2 von der mittleren Federspannung 1 zur entspannten Federspannung 3 dem Einziehen dient.

## Patentansprüche

1. Antriebsvorrichtung zum Bewegen eines bewegbaren Möbelteils (11), insbesondere einer Schublade oder einer Möbelklappe, **dadurch gekennzeichnet, dass** die Antriebsvorrichtung (10)
- einerseits als eine ver- und entriegelbare, federbelastete Ausstoßvorrichtung (8) zum Ausstoßen des Möbelteils (11) aus einer Schließstellung (SS) in Öffnungsrichtung (OR) und
- andererseits als eine federbelastete Einzugsvorrichtung (9) zum Einziehen des Möbelteils (11) in die Schließstellung (SS) fungiert,
wobei dieselbe Feder (12) die Antriebsvorrichtung (10) sowohl in dessen Funktion als Ausstoßvorrichtung (8) als auch in dessen Funktion als Einzugsvorrichtung (9) federbelastet.

2. Antriebsvorrichtung nach Anspruch 1, **dadurch gekennzeichnet, dass** die Feder (12) beim Öffnen oder Schließen des bewegbaren Möbelteils (11) entlang eines Spannwegs (SW) spannbar ist und einen Entspannungsweg (EW) aufweist, wobei die Feder (12) in einem ersten Teil des Entspannungsweges (EW1) das bewegbare Möbelteil (11) einzieht und in einem zweiten Teil des Entspannungsweges (EW2) das bewegbare Möbelteil (11) ausstößt.

3. Antriebsvorrichtung nach Anspruch 1 oder 2, **dadurch gekennzeichnet, dass** die Feder (12) eine Einzelfeder ist oder von einem Federpaket (12, 12a) gebildet ist.

4. Antriebsvorrichtung nach Anspruch 2 oder 3, **dadurch gekennzeichnet, dass**
- die Feder (12) in Schließstellung (SS) des Möbelteils (11) eine erste, mittlere Federspannung (1) zwischen dem ersten Teil des Entspannungswegs (EW1) und dem zweiten Teil des Entspannungswegs (EW2) aufweist (Fig. 4),
- die Feder (12) nach dem Ausstoßen des Möbelteils (11) und Entspannen entlang des zweiten Teils des Entspannungswegs (EW2) eine zweite, im Wesentlichen entspannte Federspannung (3) in einem bestimmten Ausstoßabstand (y) nach Verlassen der Schließstellung aufweist (Fig. 7),
- sich die Feder (12) beim Schließen des Möbelteils (11) entlang des Spannwegs (SW) spannt und in einem bestimmten Einziehabstand (x) vor Erreichen der Schließstellung (SS) eine dritte, gegenüber der ersten, erhöhte Federspannung (7) erreicht (Fig. 12),
- und dass sich die Feder (12) ausgehend von der dritten Federspannung (7) unter Entspannung entlang des ersten Teils des Entspannungswegs (EW1) und automatischem Einziehen des Möbelteils (11) in die erste Federspannung (1) entspannt (Fig. 4).

5. Antriebsvorrichtung nach einem der Ansprüche 1 bis 4, **gekennzeichnet durch** eine Dämpfvorrichtung (13), die die Einzugsbewegung der Einzugsvorrichtung (9) dämpft.

6. Antriebsvorrichtung nach einem der Ansprüche 1 bis 5, **dadurch gekennzeichnet, dass** die Antriebsvorrichtung (10) ein erstes Basiselement (14) und ein zweites Basiselement (15), die in Öffnungsrichtung (OR) bzw. Schließrichtung (SR) des bewegbaren Möbelteils (11) relativ zueinander bewegbar sind, ein am ersten Basiselement (14) bewegbar gelagertes, vorzugsweise schwenkbar gelagertes, Steuerelement (16), den das Steuerelement (16) beaufschlagenden Kraftspeicher in Form einer Feder (12) und ein mit dem Steuerelement (16) verbundenes Verriegelungselement (17) aufweist, wobei das Steuerelement (16) mit dem Verriegelungselement (17) in einem vorzugsweise herzkurvenförmigen Abschnitt (18) einer Ver- und Entriegelungsbahn (19) geführt ist und am Steuerelement (16) ein Antriebselement für das zweite Basiselement (15) angeordnet ist, wobei das zweite Basiselement (15) eine Führungsbahn (21) für das Antriebselement (20) aufweist und diese Führungsbahn (21)
- einen Ausstoßabschnitt (A) aufweist, in welchem das zweite Basiselement (15) durch das Antriebselement (20) in Öffnungsrichtung (OR) des bewegbaren Möbelteiles (11) gegenüber dem ersten Basiselement (14) bewegbar ist,
- einen Freilaufabschnitt (B) aufweist, in welchem das Antriebselement (20) in Öffnungsrichtung (OR) frei bewegbar ist,
- einen Spannabschnitt (C) aufweist, in welchem das Antriebselement (20) entgegen der Federkraft (F) der das Steuerelement (16) beaufschlagenden Feder (12) bewegbar ist und
- einen Einziehabschnitt (D) aufweist, in welchem das Antriebselement (20) unter teilweiser Entspannung der Feder (12) das zweite Basiselement (15) gegenüber dem ersten Basiselement (14) in Schließrichtung (SR) des bewegbaren Möbelteils (11) bewegt, wobei
der Ausstoßabschnitt (A) der Führungsbahn (21), das Verriegelungselement (17) und das Antriebselement (20) mit der Feder (12) die ver- und entriegelbare Ausstoßvorrichtung (8) bildet und der Einziehabschnitt (D) der Führungsbahn (21) mit dem Antriebselement (20) und derselben Feder (12) die Einzugsvorrichtung (9) bildet.

7. Antriebsvorrichtung nach Anspruch 4 und 6, **dadurch gekennzeichnet, dass**
- sich die Feder (12) im Ausstoßabschnitt (A) von der mittleren Federspannung (1) zur zweiten Federspannung (3) entspannt,
- die entspannte Federspannung (3) im Freilaufabschnitt (B) im Wesentlichen gleich bleibt,
- sich die Feder (12) im Spannabschnitt (C) von der entspannten Federspannung (3) zur erhöhten Federspannung (7) spannt und
- sich die Feder (12) im Einziehabschnitt (D) von der erhöhten Federspannung (7) zur ersten Federspannung (1) entspannt.

8. Antriebsvorrichtung nach Anspruch 7, **dadurch gekennzeichnet, dass** der Ausstoßabschnitt (A) im Wesentlichen quer zur Öffnungsrichtung (OR) verläuft, der Freilaufabschnitt (B) im Wesentlichen in Öffnungsrichtung (OR) verläuft, der Spannabschnitt (C) zumindest bereichsweise einen Winkel (α) zwischen 10° und 70°, vorzugsweise zwischen 20° und 50°, gegenüber der Öffnungsrichtung (OR) aufweist und der Einziehabschnitt (D) zumindest bereichsweise einen Winkel (β) zwischen 130° und 170°, vorzugsweise zwischen 140° und 160°, gegenüber der Öffnungsrichtung (OR) aufweist.

9. Antriebsvorrichtung nach Anspruch 8, **dadurch gekennzeichnet, dass** zumindest einer der Abschnitte (A, B, C) der Führungsbahn (21) zumindest teilweise gebogen verläuft.

10. Antriebsvorrichtung nach einem der Ansprüche 7 bis 9, **dadurch gekennzeichnet, dass** der Übergang zwischen dem Spannabschnitt (C) und dem Einziehabschnitt (D) dem Einziehabstand (x) entspricht und dort die Feder (12) die höchste Federspannung (7) erreicht.

11. Antriebsvorrichtung nach einem der Ansprüche 7 bis 10, **dadurch gekennzeichnet, dass** der Spannabschnitt (C) und der Einziehabschnitt (D) vom Freilaufabschnitt (B) quer zur Öffnungsrichtung (OR) beabstandet sind, wobei der größte Abstand (2) beider Abschnitte (C, D) zum Freilaufabschnitt (B) beim bestimmten Einziehabstand (x) gegeben ist.

12. Schubladenausziehführung (29) für ein bewegbares Möbelteil (11) in Form einer Schublade, **gekennzeichnet durch** eine Antriebsvorrichtung (10) nach einem der Ansprüche 1 bis 11.

13. Schubladenausziehführung nach Anspruch 12, **gekennzeichnet durch** eine Ladenschiene (30) und eine Korpusschiene (31), wobei das erste Basiselement (14) an der Korpusschiene (31) und das zweite Basiselement (15) an der Ladenschiene (30) angeordnet ist.

14. Möbel (32) mit einem Möbelkorpus (26) und einem bewegbaren Möbelteil (11), **gekennzeichnet durch** eine Antriebsvorrichtung (10) nach einem der Ansprüche 1 bis 11.

15. Möbel nach Anspruch 14, **dadurch gekennzeichnet, dass** das erste Basiselement (14) am bewegbaren Möbelteil (11), vorzugsweise an der Unterseite (U) eines Schubladenbodens (33), angeordnet ist und das zweite Basiselement (15) am Möbelkorpus (26), vorzugweise an einer am Möbelkorpus (26) befestigten Korpusschiene (31) einer Schubladenausziehführung (29), angeordnet ist.

16. Möbel nach Anspruch 14, **dadurch gekennzeichnet, dass** das erste Basiselement (14) am Möbelkorpus (26), vorzugsweise an einer am Möbelkorpus (26) befestigten Korpusschiene (31) einer Schubladenausziehführung (29), angeordnet ist und das zweite Basiselement (15) am bewegbaren Möbelteil (11), vorzugsweise an einer dem Möbelteil (11) zugeordneten Ladenschiene (30) der Schubladenausziehführung (29), angeordnet ist.

## Claims

1. A drive device for moving a movable furniture part (11), in particular a drawer or a furniture flap, **characterized in that** the drive device (10) acts
- on the one hand as a lockable and unlockable spring-loaded ejection device (8) for ejecting the furniture part (11) from a closed position (SS) in the opening direction (OR), and
- on the other hand as a spring-loaded retraction device (9) for retracting the furniture part (11) into the closed position (SS),
wherein the same spring (12) spring-loads the drive device (10) both in its function as an ejection device (8) and also in its function as a retraction device (9).

2. The drive device according to claim 1, wherein the spring (12) can be stressed along a stressing travel (SW) upon opening or closing of the movable furniture part (11) and has a relief travel (EW), wherein the spring (12) retracts the movable furniture part (11) in a first part of the relief travel (EW1) and ejects the movable furniture part (11) in a second part of the relief travel (EW2).

3. The drive device according to claim 1 or 2, wherein the spring (12) is an individual spring or is formed by a spring pack (12, 12a).

4. The drive device according to claim 2 or 3, wherein
- the spring (12) in the closed position (SS) of the furniture part (11) has a first medium spring stress (1) between the first part of the relief travel (EW1) and the second part of the relief travel (EW2) (Figure 4),
- after ejection of the furniture part (11) and relief of stress along the second part of the relief travel (EW2) the spring (12) has a second, substantially relieved spring stress (3) at a given ejection spacing (y) after leaving the closed position (Figure 7),
- upon closure of the furniture part (11) the spring (12) is stressed along the stressing travel (SW) and at a given retraction spacing (x) before reaching the closed position (SS) reaches a third spring stress (7) which is increased in relation to the first (Figure 12), and
- starting from the third spring stress (7) with stress relief along the first part of the relief travel (EW1) and automatic retraction of the furniture part (11) the spring (12) is relieved into the first spring stress (1) (Figure 4).

5. The drive device according to one of the claims 1 to 4, wherein a damping device (13) is provided which damps the retraction movement of the retraction device (9).

6. The drive device according to one of the claims 1 to 5, wherein the drive device (10) has a first base element (14) and a second base element (15) which are movable relative to each other in the opening direction (OR) and the closing direction (SR) respectively of the movable furniture part (11), a control element (16) which is mounted movably, preferably pivotably, on the first base element (14), the force storage means in the form of a spring (12) acting on the control element (16), and a locking element (17) connected to the control element (16), wherein the control element (16) is guided with the locking element (17) in a preferably cardioid-shaped portion (18) of a locking and unlocking path (19) and a drive element for the second base element (15) is arranged on the control element (16), wherein the second base element (15) has a guide path (21) for the drive element (20) and said guide path (21)
- has an ejection portion (A) in which the second base element (15) is movable relative to the first base element (14) in the opening direction (OR) of the movable furniture part (11) by the drive element (20),
- has a free-running portion (B) in which the drive element (20) is freely movable in the opening direction (OR),
- has a stressing portion (C) in which the drive element (20) is movable in opposition to the spring force (F) of the spring (12) acting on the control element (16), and
- has a retraction portion (D) in which the drive element (20) moves the second base element (15) relative to the first base element (14) in the closing direction (SR) of the movable furniture part (11) with partial stress relief of the spring (12), wherein
the ejection portion (A) of the guide path (21), the locking element (17) and the drive element (20) with the spring (12) forms the lockable and unlockable ejection device (8) and the retraction portion (D) of the guide path (21) with the drive element (20) and the same spring (12) forms the retraction device (9).

7. The drive device according to claim 4 and 6, wherein
- the spring (12) is relieved in the ejection portion (A) from the medium spring stress (1) to the second spring stress (3),
- the relieved spring stress (3) remains substantially the same in the free-running portion (B),
- the spring (12) is stressed from the relieved spring stress (3) to the increased spring stress (7) in the stressing portion (C), and
- the spring (12) is relieved from the increased spring stress (7) to the first spring stress (1) in the retraction portion (D).

8. The drive device according to claim 7, wherein the ejection portion (A) extends substantially transversely relative to the opening direction (OR), the free-running portion (B) extends substantially in the opening direction (OR), the stressing portion (C) has at least region-wise an angle (α) between 10° and 70°, preferably between 20° and 50°, relative to the opening direction (OR), and the retraction portion (D) has at least region-wise an angle (β) between 130° and 170°, preferably between 140° and 160°, relative to the opening direction (OR).

9. The drive device according to claim 8, wherein at least one of the portions (A, B, C) of the guide path (21) extends at least partially in a curve.

10. The drive device according to one of the claims 7 to 9, wherein the transition between the stressing portion (C) and the retraction portion (D) corresponds to the retraction spacing (x) and there the spring (12) reaches the highest spring stress (7).

11. The drive device according to one of the claims 7 to 10, wherein the stressing portion (C) and the retraction portion (D) are spaced from the free-running portion (B) transversely relative to the opening direction (OR), wherein the greatest spacing (2) of both portions (C, D) relative to the free-running portion (B) is at the given retraction spacing (x).

12. A drawer extension guide (29) for a movable furniture part (11) in the form of drawer with a drive device (10) according to one of the claims 1 to 11.

13. The drawer extension guide according to claim 12, comprising a drawer rail (30) and a carcass rail (31), wherein the first base element (14) is arranged on the carcass rail (31) and the second base element (15) is arranged on the drawer rail (30).

14. An article of furniture (32) comprising a furniture carcass (26) and a movable furniture part (11), wherein a drive device (10) according to one of the claims 1 to 11 is provided.

15. The article of furniture according to claim 14, wherein the first base element (14) is arranged on the movable furniture part (11), preferably at the underside (U) of a drawer bottom (33), and the second base element (15) is arranged on the furniture carcass (26), preferably on a carcass rail (31) of a drawer extension guide (29), that is fixed to the furniture carcass (26).

16. The article of furniture according to claim 14, wherein the first base element (14) is arranged on the furniture carcass (26), preferably a carcass rail (31) of a drawer extension guide (29), that is fixed to the furniture carcass (26), and the second base element (15) is arranged on the movable furniture part (11), preferably on a drawer rail (30) of the drawer extension guide (29), that is associated with the furniture part (11).

## Revendications

1. Dispositif d'entraînement pour le déplacement d'une partie mobile de meuble (11), plus particulièrement d'un tiroir ou d'un couvercle de meuble, **caractérisé en ce que** le dispositif d'entraînement (10)
- fonctionne d'une part comme un dispositif d'éjection (8) verrouillable et déverrouillable et muni de ressorts pour l'éjection de la partie du meuble (11) à partir d'une position de fermeture (SS) dans une direction d'ouverture (OR) et
- fonctionne d'autre part comme un dispositif de rétraction (9) muni de ressorts pour la rétraction de la partie du meuble (11) dans la position de fermeture (SS),
le même ressort (12) équipant le dispositif d'entraînement (10) aussi bien dans sa fonction de dispositif d'éjection (8) que dans sa fonction de dispositif de rétraction (9).

2. Dispositif d'entraînement selon la revendication 1, **caractérisé en ce que** le ressort (12) peut être comprimé, lors de l'ouverture ou la fermeture de la partie de meuble mobile (11) le long d'une course de compression (SW) et présente une course de détente (EW), le ressort (12) rétractant, dans une première partie de la course de détente (EW1), la partie mobile du meuble (11) et, dans une deuxième partie de la course de détente (EW2), éjecte la partie mobile du meuble (11).

3. Dispositif d'entraînement selon la revendication 1 ou 2, **caractérisé en ce que** le ressort (12) est un ressort individuel ou est constitué d'un ensemble de ressorts (12, 12a).

4. Dispositif d'entraînement selon la revendication 2 ou 3, **caractérisé en ce que**
- le ressort (12) présente, dans la position de fermeture (SS) de la partie de meuble (11), une première tension de ressort moyenne (1) entre la première partie de la course de détente (EW1) et la deuxième partie de la course de détente (EW2) (Fig. 4),
- le ressort (12) présente, après l'éjection de la partie de meuble (11) et la détente le long de la deuxième partie de la course de détente (EW2), une deuxième tension de ressort (3), globalement détendue, à une distance d'éjection (y) déterminée après avoir quitté la position de fermeture (Fig. 7),
- le ressort (12) se tend lors de la fermeture de la partie de meuble (11) le long de la course de compression (SW) et atteint, à une distance de rétraction (x) déterminée, avant d'atteindre la position de fermeture (SS), une troisième tension de ressort (7) augmentée par rapport à la première (Fig. 12),
- et le ressort (12) se détend, à partir de la troisième tension de ressort (7), en se détendant le long de la première partie de la course de détente (EW1) et en rétractant automatiquement la partie de meuble (11), à la première tension de ressort (1) (Fig. 4).

5. Dispositif d'entraînement selon l'une des revendications 1 à 4, **caractérisé par** un dispositif d'amortissement (13) qui amortit le mouvement de rétraction du dispositif de rétraction (9).

6. Dispositif d'entraînement selon l'une des revendications 1 à 5, **caractérisé en ce que** le dispositif d'entraînement (10) comprend un premier élément de base (14) et un deuxième élément de base (15), qui sont mobiles l'un par rapport à l'autre dans la direction d'ouverture (OR) ou la direction de fermeture (SR) de la partie de meuble mobile (11), un élément de commande (16), logé de manière mobile, de préférence de manière pivotante, sur le premier élément de base (14), l'accumulateur de force alimentant l'élément de commande (16), sous la forme d'un ressort (12), et un élément de verrouillage (17) relié à l'élément de commande (16), l'élément de commande (16) étant guidé avec l'élément de verrouillage (17) dans une portion (18), ayant de préférence la forme d'un coeur, d'une piste de verrouillage et de déverrouillage (19) et, sur l'élément de commande (16), se trouve un élément d'entraînement pour le deuxième élément de base (15), le deuxième élément de base (15) comprenant une piste de guidage (21) pour l'élément d'entraînement (20) et cette piste de guidage (21)
- comprenant une portion d'éjection (A), dans laquelle le deuxième élément de base (15) est mobile, grâce à l'élément d'entraînement (20), dans la direction d'ouverture (OR) de la partie mobile du meuble (11) par rapport au premier élément de base (14),
- comprenant une portion de roue libre (B), dans laquelle l'élément d'entraînement (20) est mobile librement dans la direction d'ouverture (OR),
- comprenant une portion de compression (C), dans laquelle l'élément d'entraînement (20) est mobile à l'encontre de la force (F) du ressort (12) alimentant l'élément de commande (16) et
- comprenant une portion de rétraction (D), dans laquelle l'élément d'entraînement (20) déplace, sous l'effet d'une détente partielle du ressort (12), le deuxième élément de base (15) par rapport au premier élément de base (14) dans la direction de fermeture (SR) de la partie mobile du meuble (11),
la portion d'éjection (A) de la piste de guidage (21), l'élément de verrouillage (17) et l'élément d'entraînement (20) formant, avec le ressort (12), le dispositif d'éjection (8) verrouillable et déverrouillable et la portion de rétraction (D) de la piste de guidage (21) formant, avec l'élément d'entraînement (20) et le même ressort (12), le dispositif de rétraction (9).

7. Dispositif d'entraînement selon la revendication 4 et 6, **caractérisé en ce que**
- le ressort (12) se détend dans la portion d'éjection (A), de la tension de ressort moyenne (1) vers la deuxième tension de ressort (3),
- la tension de ressort (3) détendue reste globalement constante dans la portion de roue libre (B),
- le ressort (12) se tend, dans la portion de compression (C), de la tension de ressort détendue (3) à la tension de ressort augmentée (7) et
- le ressort (12) se détend, dans la portion de rétraction (D), de la tension de ressort augmentée (7) à la première tension de ressort (1).

8. Dispositif d'entraînement selon la revendication 7, **caractérisé en ce que** la portion d'éjection (A) est globalement transversale par rapport à la direction d'ouverture (OR), la portion de roue libre (B) s'étend dans la direction d'ouverture (OR), la portion de compression (C) présente au moins par endroits un angle (α) entre 10° et 70°, de préférence entre 20° et 50°, par rapport à la direction d'ouverture (OR) et la portion de rétraction (D) présente au moins par endroits un angle β) entre 130° et 170°, de préférence entre 140° et 160°, par rapport à la direction d'ouverture (OR).

9. Dispositif d'entraînement selon la revendication 8, **caractérisé en ce qu'**au moins une des portions (A, B, C) de la piste de guidage (21) est au moins partiellement incurvée.

10. Dispositif d'entraînement selon l'une des revendications 7 à 9, **caractérisé en ce que** la transition entre la portion de compression (C) et la portion de rétraction (D) correspond à la distance de rétraction (x) et le ressort (12) y atteint la tension de ressort la plus élevée (7).

11. Dispositif d'entraînement selon l'une des revendications 7 à 10, **caractérisé en ce que** la portion de compression (C) et la portion de rétraction (D) sont éloignées de la portion de roue libre (B) transversalement à la direction d'ouverture (OR), la distance (2) la plus grande des deux portions (C, D) par rapport à la portion de roue libre (B) étant donnée pour une distance de rétraction (x) déterminée.

12. Guidage de sortie de tiroir (29) pour une partie mobile de meuble (11) sous la forme d'un tiroir, **caractérisé par** un dispositif d'entraînement (10) selon l'une des revendications 1 à 11.

13. Guidage de sortie de tiroir selon la revendication 12, **caractérisé par** une glissière de chargement (30) et une glissière de corps (31), le premier élément de base (14) se trouvant sur la glissière de corps (31) et le deuxième élément de base (15) se trouvant sur la glissière de chargement (30).

14. Meuble (32) avec un corps de meuble (26) et une partie mobile de meuble (11), **caractérisé par** un dispositif d'entraînement (10) selon l'une des revendications 1 à 11.

15. Meuble selon la revendication 14, **caractérisé en ce que** le premier élément de base (14) se trouve sur la partie mobile du meuble (11), de préférence sur le côté inférieur (U) d'un fond de tiroir (33), et le deuxième élément de base (15) se trouve sur le corps de meuble (26), de préférence sur une glissière de corps (31) d'un guidage de sortie de tiroir (29), fixée sur le corps du meuble (26).

16. Meuble selon la revendication 14, **caractérisé en ce que** le premier élément de base (14) se trouve sur le corps de meuble (26), de préférence sur une glissière de corps (31) d'un guidage de sortie de tiroir (29), fixée sur le corps du meuble (26) et le deuxième élément de base (15) se trouve sur la partie mobile du meuble (11), de préférence sur une glissière de chargement (30) du guidage de sortie de tiroir (29), associée à la partie de meuble (11).
